# EUROPEAN PATENT APPLICATION

(11) **EP 4 817 951 A1**
(43) Date of publication of application: **07.10.2026**
(21) Application number: 26168569.7
(22) Date of filing: 27.03.2026
(51) Int. Cl.: B60N 2/865, B60N 2/02, B60N 2/815, B60N 2/818, B60N 2/829

(54) **FRONT-REAR ADJUSTMENT MECHANISM, HEADREST ASSEMBLY, AND VEHICLE SEAT**

(30) Priority: 31.03.2025 CN 202520592081 U
(71) Applicant: Yanfeng International Automotive Technology Co., Ltd., Shanghai 201306 (CN)
(72) Inventor: ZHANG, Xinze, Shanghai, 201306 (CN); CAO, Yaowei, Shanghai, 201306 (CN)
(74) Representative: Specht, Peter

(57) **Abstract**

The present disclosure relates to a front-rear adjustment mechanism for adjusting a headrest cover of a vehicle seat in the front-rear direction, wherein the front-rear adjustment mechanism is provided not only with a first connection point configured for manual front-rear adjustment function but also simultaneously with a second connection point configured for electric front-rear adjustment function, wherein the first connection point is used to connect a locking mechanism that provides locking only for rearward adjustment during manual front-rear adjustment, and the second connection point is used to connect a front-rear adjustment drive device. The present disclosure also relates to a manually front-rear adjustable headrest assembly, an electrically front-rear adjustable headrest assembly, and a vehicle seat. The modularly designed front-rear adjustment mechanism according to the present disclosure enables a multifunctional manual/electric adjustment platform.

## Description

### Technical Field

The present disclosure relates to the field of vehicle technology, and more particularly to a front-rear adjustment mechanism, a manually front-rear adjustable headrest assembly, an electrically front-rear adjustable headrest assembly, and a vehicle seat including either the manually front-rear adjustable headrest assembly or the electrically front-rear adjustable headrest assembly.

### Background of Invention

In automotive seat design, the adjustability of the headrest is one of the key factors for enhancing comfort and safety. In conventional headrest adjustment mechanisms, designs typically target only one specific operational scenario for adjustment. For example, the headrest adjustment mechanism is either designed exclusively for manual adjustment or exclusively for automatic adjustment. In other words, traditional designs do not consider requirements for universality or modular design.

### Summary of Invention

An object of the present disclosure is to provide a front-rear adjustment mechanism, a manually front-rear adjustable headrest assembly comprising this front-rear adjustment mechanism, an electrically front-rear adjustable headrest assembly comprising this front-rear adjustment mechanism, and a vehicle seat comprising either the manually front-rear adjustable headrest assembly or the electrically front-rear adjustable headrest assembly, wherein the front-rear adjustment mechanism employs a modular design capable of serving as a multifunctional platform supporting both manual and electric adjustment. Furthermore, by adopting a modular design, lifecycle costs can be reduced.

To this end, a first aspect of the present disclosure relates to a front-rear adjustment mechanism for adjusting a headrest cover of a vehicle seat in the front-rear direction, characterized in that the front-rear adjustment mechanism is provided not only with a first connection point configured for manual front-rear adjustment function but also simultaneously with a second connection point configured for electric front-rear adjustment function, wherein the first connection point is used to connect a locking mechanism that provides locking only for rearward adjustment during manual front-rear adjustment, and the second connection point is used to connect a front-rear adjustment drive device.

By providing both a first connection point configured for manual front-rear adjustment function and a second connection point configured for electric front-rear adjustment function on the front-rear adjustment mechanism, connection points can be reserved simultaneously for both manual and electric adjustment functions. Thus, a modularly designed front-rear adjustment mechanism can be provided, which can serve as a core front-rear adjustment structure. Based on this core front-rear adjustment structure, a manual front-rear adjustment mechanism-particularly one equipped with a unidirectional locking function-as well as an electric front-rear adjustment mechanism can be extended according to requirements.

In some embodiments, the front-rear adjustment mechanism comprises: a base capable of being connected to a seat backrest; an upper connecting plate capable of being connected to the headrest cover or to a fixed base of an up-down adjustment mechanism; and a front linkage and a rear linkage each hinged or hingeably connected to the base and the upper connecting plate, thereby forming multiple hinge points. Thus, a four-bar linkage assembly for both front-rear adjustment and up-down adjustment functions can advantageously be provided.

In some embodiments, the first connection point is located at or near any one of the multiple hinge points, while the second connection point is located on the main body of the front linkage, the rear linkage, the base, or the upper connecting plate. Thus, the first and second connection points can be provided at appropriate position according to requirements.

In some embodiments, the front linkage is configured as U-shaped, the front linkage comprising two side legs and an intermediate connecting portion connecting the two side legs. Thus, sufficient installation space can be left in the middle of the front linkage, providing ample room for the arrangement and installation of possible other components. Moreover, compared to two separate front linkages, this U-shaped structure with an intermediate connecting portion has better structural strength and stiffness, can withstand greater forces, and is less prone to deformation. Additionally, it provides a more stable front-rear adjustment process. Furthermore, the U-shaped structure is also more convenient in terms of forming, especially for tubular profile components, as the U-shaped structure can be advantageously obtained through bending forming.

In some embodiments, the second connection point is located on the intermediate connecting portion of the U-shaped front linkage. Thus, sufficient structural space can be provided for the installation and connection of the front-rear adjustment drive mechanism. Moreover, since the second connection point is located on the intermediate connecting portion, a more uniform distribution of front-rear adjustment force can be achieved compared to arranging the second connection point on a side leg.

In some embodiments, the front linkage is configured as a hollow tubular profile component. Thus, a robust front linkage structure can be provided. Compared to traditional sheet- or plate-type front linkages, a front linkage constructed as a tubular profile member exhibits a greater area moment of inertia, thereby be able to offer superior resistance to deformation.

A second aspect of the present disclosure relates to a manually front-rear adjustable headrest assembly, which comprises the front-rear adjustment mechanism according to any embodiment of the present disclosure. The manually front-rear adjustable headrest assembly comprises a locking mechanism for locking the rearward adjustment movement of the front-rear adjustment mechanism and an unlocking mechanism, wherein the locking mechanism is connected to the front-rear adjustment mechanism at the first connection point.

In some embodiments, the locking mechanism is configured not to lock the forward adjustment movement of the front-rear adjustment mechanism, thereby allowing the front-rear adjustment mechanism to adjust the headrest cover forward, but to lock the rearward adjustment movement of the front-rear adjustment mechanism, thereby restricting the front-rear adjustment mechanism from adjusting the headrest cover rearward; wherein the unlocking mechanism cooperates with the locking mechanism and is configured to unlock the locking of the locking mechanism when the front-rear adjustment mechanism adjusts the headrest cover rearward, thereby enabling the front-rear adjustment mechanism to adjust the headrest cover rearward.

In traditional headrest adjustment mechanisms, upon experiencing a forward impact, the headrest may move to its foremost position and unlock due to inertia, subsequently retracting automatically to its rearmost position. This situation may compromise seat safety, as the headrest may no longer provide adequate support after the impact, thereby increasing the risk of occupant injury. With the manually front-rear adjustable headrest assembly according to the present disclosure, a unique unidirectional locking design concept enables forward adjustment without requiring unlocking, while rearward adjustment requires unlocking. This unidirectional locking design may prevent the headrest from automatically unlocking and retracting to its rearmost position after moving to foremost position due to inertial during a forward impact, thereby enhancing seat safety. Consequently, the stability of the headrest during forward impacts is improved, reducing the risk of occupant injury caused by headrest movement. Additionally, the headrest adjustment process is simplified: occupants can conveniently adjust the headrest rearward when needed without concerns about safety during forward adjustment. Moreover, the overall safety and reliability of the seat are enhanced, offering occupants a more reassuring driving experience. In other words, this design not only improves the safety of the headrest assembly but also provides users with a more convenient operating experience.

In some embodiments, the locking mechanism comprises a first locking member and a second locking member, wherein the first locking member is capable of engaging with the second locking member in a resettable manner; wherein when the front-rear adjustment mechanism adjusts the headrest cover forward, it is capable of driving the second locking member to move so as to disengage from the first locking member, thereby allowing the front-rear adjustment mechanism to adjust the headrest cover forward; wherein when the front-rear adjustment mechanism adjusts the headrest cover rearward, the unlocking mechanism is capable of driving the first locking member to move so as to disengage from the second locking member, thereby allowing the front-rear adjustment mechanism to adjust the headrest cover rearward. Thus, a reliable and advantageous locking mechanism can be achieved.

In some embodiments, a first mating toothed portion is provided at one end of the first locking member, and the second locking member has a second mating toothed portion, wherein the first mating toothed portion and the second mating toothed portion are configured such that the forward adjustment movement of the front-rear adjustment mechanism is capable of driving the second locking member to move, causing the first mating toothed portion and the second mating toothed portion to automatically disengage from each other, thereby allowing the front-rear adjustment mechanism to adjust the headrest cover forward; whereas the rearward adjustment movement of the front-rear adjustment mechanism causes the first mating toothed portion and the second mating toothed portion to remain engaged, thereby restricting the front-rear adjustment mechanism from adjusting the headrest cover rearward. Thus, a stepped-adjustable-and particularly multi-position adjustable-reliable locking structure can be achieved through the engagement of teeth, enabling occupants to adjust the headrest cover to a desired stable position as needed.

In some embodiments, the unlocking mechanism comprises an unlocking moving member, and movement of the unlocking moving member in a first direction is capable of driving the first locking member to move, so as to disengage the first locking member from the second locking member, thereby allowing the front-rear adjustment mechanism to adjust the headrest rearward. Thus, convenient unlocking can be realized, allowing occupants to achieve unlocking by simply pushing or pulling the unlocking moving member.

In some embodiments, the first locking member is configured to rotate about a first rotational axis extending in the first direction. The unlocking mechanism further comprises an intermediate transmission member cooperating with the first locking member, wherein movement of the unlocking moving member in the first direction is capable of driving the intermediate transmission member to move, which in turn drives the first locking member to rotate. By providing the intermediate transmission member, the linear movement of the unlocking moving member can be advantageously converted into another form of movement of the first locking member.

In some embodiments, movement of the unlocking moving member in the first direction is capable of driving the intermediate transmission member to rotate, thereby driving the first locking member to rotate. Thus, the linear movement of the unlocking moving member can be advantageously converted into rotation of the first locking member via the rotation of the intermediate transmission member.

In some embodiments, the intermediate transmission member comprises a vertically extending rotary shaft and first and second protruding portions provided on the rotary shaft for cooperation with the unlocking moving member and the first locking member, respectively, such that movement of the unlocking moving member in the first direction drives the rotary shaft to rotate via the first protruding portion, and the second protruding portion then drives the first locking member to rotate about a first rotation axis extending in the first direction. Thus, an advantageous intermediate transmission member structure is provided, capable of reliably transmitting movement.

In some embodiments, movement of the unlocking moving member in the first direction is capable of driving the intermediate transmission member to translate, thereby driving the first locking member to rotate. Thus, the linear movement of the unlocking moving member can be advantageously converted into rotation of the first locking member via the translation of the intermediate transmission member.

In some embodiments, the unlocking moving member and the intermediate transmission member cooperate via a first inclined surface structure, such that movement of the unlocking moving member in the first direction is capable of driving the intermediate transmission member to translate in a second direction orthogonal to the first direction, wherein the translation of the intermediate transmission member in this second direction causes the first locking member to rotate. Thus, the conversion from the linear movement of the unlocking moving member to the translation of the intermediate transmission member can be simply achieved by providing the first inclined surface structure, which enables robust movement conversion.

In some embodiments, the rotatable first locking member has a protruding hook-shaped portion serving as the first mating toothed portion, wherein the shape of this hook-shaped portion and the shape of the second mating toothed portion of the second locking member are designed such that the first mating toothed portion of the rotatable first locking member and the second mating toothed portion of the second locking member form a first ratchet structure, wherein when the front-rear adjustment mechanism adjusts the headrest cover forward, it is capable of driving the second locking member to move, causing the first locking member to rotate and its hook-shaped portion to automatically disengage from the second mating toothed portion. Thus, a reliable unidirectional locking function can be achieved via the first ratchet structure.

In some embodiments, movement of the unlocking moving member in the first direction is capable of driving the first locking member to translate. Thus, advantageous movement transmission from the unlocking moving member to the first locking member can be realized, thereby realizing robust movement transfer.

In some embodiments, the unlocking moving member and the first locking member cooperate via a second inclined surface structure, such that movement of the unlocking moving member in the first direction is capable of driving the first locking member to translate along another second direction orthogonal to the first direction. Thus, the conversion from the linear movement of the unlocking moving member to the linear translation of the first locking member can be simply achieved by providing the second inclined surface structure, which enables robust movement conversion.

In some embodiments, the first mating toothed portion of the translatable first locking member and the second mating toothed portion of the second locking member form a second ratchet structure, wherein when the front-rear adjustment mechanism adjusts the headrest cover forward, it is capable of driving the second locking member to move, causing the first locking member to translate and its first mating toothed portion to automatically disengage from the second mating toothed portion. Thus, a reliable unidirectional locking function is achieved via the second ratchet structure.

In some embodiments, the manually front-rear adjustable headrest assembly further comprises an up-down adjustment mechanism, the up-down adjustment mechanism comprising a moving part and a fixed base, wherein the fixed base is connected to the front-rear adjustment mechanism, the moving part is connected to the headrest cover, and the moving part is capable of sliding up and down relative to the fixed base, thereby realizing up-down adjustment of the headrest cover. Thus, an additional up-down adjustment function for the headrest cover can be provided in addition to the front-rear adjustment function.

In some embodiments, a plurality of spaced-apart locking slots are provided on the fixed base, wherein the unlocking moving member serves as an up-down adjustment unlocking member and cooperates with the locking slots, wherein when the unlocking moving member engages with the locking slots, adjustment of the headrest cover by the up-down adjustment mechanism is restricted; whereas when the unlocking moving member disengages from the locking slots, adjustment of the headrest cover by the up-down adjustment mechanism is permitted. Thus, the same unlocking moving member can be used to simultaneously unlock both the rearward adjustment and the up-down adjustment of the headrest cover.

In some embodiments, the unlocking moving member includes a protruding moving portion, wherein movement of the unlocking moving member in the first direction causes the protruding moving portion to disengage from the locking slots, while simultaneously driving the first locking member to move, so as to disengage from the second locking member, thereby permitting up-down adjustment of the headrest by the up-down adjustment mechanism and rearward adjustment of the headrest by the front-rear adjustment mechanism. The protruding moving portion may, for example, be configured as a U-shaped portion. Thus, simultaneous unlocking of rearward and up-down adjustments of the headrest cover can be advantageously achieved via the protruding moving portion of the unlocking moving member.

In some embodiments, the up-down adjustment mechanism further comprises a second motor assembly, the second motor assembly comprising a second motor, a second lead screw rotatably connected to the second motor, and a second nut provided on the second lead screw, wherein the second motor is fixedly arranged relative to one of the fixed base and the moving part, and the second nut is operatively connected to the other of the fixed base and the moving part, wherein when the second motor drives the second nut to move along the second lead screw, the moving part moves relative to the fixed base. Thus, advantageous motor-based automatic up-down adjustment can be realized. In the present disclosure, "operatively connected" means that the second nut may be either fixedly connected to the corresponding component or connected via a transmission mechanism.

In some embodiments, the second locking member is arranged on one of the front linkage and the rear linkage, such that the second mating toothed portion is close to any one of the multiple hinge points, wherein when the second mating toothed portion is close to an upper hinge point, the first locking member is movably arranged on the upper connecting plate; whereas when the second mating toothed portion is close to a lower hinge point, the first locking member is movably arranged on the base. Thus, the first and second locking members can be advantageously provided on corresponding components of the four-bar linkage assembly according to requirements.

In some embodiments, the second locking member further has a linkage hinge portion for hingedly connecting the front linkage to the upper connecting plate, wherein the second locking member is arranged on a lateral region of the intermediate connecting portion of the front linkage. Thus, the second locking member serves not only a locking function but also a hinge function connecting the front linkage to other parts of the four-bar linkage assembly, thereby making full use of the second locking member. Moreover, this arrangement is compatible with the U-shaped structure of the front linkage. Since the second locking member additionally serves the hinge function, there is no need to provide a linkage hinge portion on the U-shaped front linkage, which is beneficial for manufacturing the U-shaped front linkage.

In some embodiments, the second locking member has a protrusion extending laterally in its transverse direction to increase the connection area between the second locking member and the front linkage. Thus, a more secure connection of the second locking member to the front linkage can be achieved.

In some embodiments, a stopper is provided on the side of the first locking member opposite to the upper connecting plate or the base, the stopper being configured to restrict lateral movement of the first locking member to prevent tooth disengagement between the first mating toothed portion and the second mating toothed portion. Thus, Thus, a simple stopper can be used to prevent tooth disengagement of the first mating toothed portion from the second mating toothed portion.

In some embodiments, when the first locking member is configured to be slidable, the first locking member is slidably arranged on the upper connecting plate or the base via a slide slot-type sliding structure. Thus, an advantageous and robust sliding fit between the first locking member and the upper connecting plate or the base can be achieved.

In some embodiments, the unlocking moving member comprises or is configured as a push member, wherein pushing of push member in the first direction is capable of driving the first locking member to move. Thus, in the case of a push member, occupants can intuitively unlock by pressing the push member. Moreover, in the case of a push member, the design of associated cooperating components is simpler.

A third aspect of the present disclosure relates to an electrically front-rear adjustable headrest assembly, which comprises the front-rear adjustment mechanism according to any embodiment of the present disclosure. The electrically front-rear adjustable headrest assembly comprises a first motor assembly for driving the front-rear adjustment mechanism to perform front-rear adjustment movement. The first motor assembly is connected as the front-rear adjustment drive device to the front-rear adjustment mechanism at the second connection point.

In some embodiments, the first motor assembly comprises a first motor, a first lead screw rotatably connected to the first motor, and a first nut provided on the first lead screw, wherein the first motor is pivotally arranged on one of the base and the upper connecting plate, and the first nut is pivotally connected to one of the front linkage and the rear linkage; or alternatively, the first motor is pivotally arranged on one of the front linkage and the rear linkage, and the first nut is pivotally connected to one of the base and the upper connecting plate. Thus, advantageous motor-based automatic front-rear adjustment can be realized. Moreover, the first motor assembly can be flexibly connected to the modularly designed front-rear adjustment mechanism according to requirements.

In some embodiments, the first motor is pivotally arranged on the base, and the first nut is directly or indirectly-via an intermediate connecting plate-pivotally connected to the front linkage. Thus, a part of the first motor assembly can be directly or indirectly pivotably connected to the front linkage, making full use of the structural space provided by the front linkage.

In some embodiments, the first nut is pivotally connected to the intermediate connecting portion of the front linkage. Thus, favorable force distribution and full utilization of the structural space of the front linkage can be achieved.

In some embodiments, the electrically front-rear adjustable headrest assembly further comprises an up-down adjustment mechanism, the up-down adjustment mechanism comprising a moving part and a fixed base, wherein the fixed base is connected to the front-rear adjustment mechanism, the moving part is connected to the headrest cover, and the moving part is capable of sliding up and down relative to the fixed base, thereby realizing up-down adjustment of the headrest cover. Thus, in addition to the front-rear adjustment function, up-down adjustment of the headrest cover is additionally provided.

In some embodiments, a plurality of spaced-apart locking slots are provided on the fixed base, and the up-down adjustment mechanism comprises an up-down adjustment unlocking member cooperating with the locking slots, wherein when the up-down adjustment unlocking member engages with the locking slots, adjustment of the headrest cover by the up-down adjustment mechanism is restricted; whereas when the up-down adjustment unlocking member disengages from the locking slots, adjustment of the headrest cover by the up-down adjustment mechanism is permitted. Thus, advantageous unlocking of up-down adjustment can be realized.

In some embodiments, the up-down adjustment mechanism further comprises a second motor assembly, the second motor assembly comprising a second motor, a second lead screw rotatably connected to the second motor, and a second nut provided on the second lead screw, wherein the second motor is fixedly arranged relative to one of the fixed base and the moving part, and the second nut is operatively connected to the other of the fixed base and the moving part, such that when the second motor drives the second nut to move along the second lead screw, the moving part moves relative to the fixed base. Thus, advantageous motor-driven automatic up-down adjustment can be realized.

A fourth aspect of the present disclosure relates to a vehicle seat, characterized in that the vehicle seat includes either the manually front-rear adjustable headrest assembly according to any embodiment of the present disclosure or the electrically front-rear adjustable headrest assembly according to any embodiment of the present disclosure.

The technical features mentioned above, the technical features to be mentioned below, and the technical features shown individually in the drawings may be combined arbitrarily, provided that the combined technical features are not mutually contradictory. All feasible combinations of features are explicitly disclosed herein as technical content. Any individual sub-feature included among multiple sub-features within the same sentence may be applied independently, without necessarily being applied together with the other sub-features.

### Brief Description of Drawings

The present disclosure is further described below with reference to schematic drawings and exemplary embodiments.
Figure 1 shows a schematic exploded view of one embodiment of the front-rear adjustment mechanism according to the present disclosure.
Figure 2 shows a schematic view of a first embodiment of the manually adjustable headrest assembly according to the present disclosure, shown mounted on a seat frame and in different positions during forward adjustment.
Figure 3a shows a schematic perspective view of the manual front-rear adjustment mechanism with a locking mechanism for manual adjustment of the first embodiment of the manually front-rear adjustable headrest assembly according to the present disclosure, viewed from the front side.
Figure 3b shows a schematic perspective view of the manual front-rear adjustment mechanism with a locking mechanism for manual adjustment as shown in Figure 3a, viewed from the rear side.
Figure 4 shows a schematic exploded view of the manual front-rear adjustment mechanism with a locking mechanism for manual adjustment as shown in Figure 3a.
Figure 5 shows a schematic perspective view of the first embodiment of the manually front-rear adjustable headrest assembly according to the present disclosure.
Figure 6 shows a schematic exploded view of the manually front-rear adjustable headrest assembly shown in Figure 5.
Figure 7 shows a top-sectional view of a partial portion of the manually adjustable headrest assembly of Figure 5, wherein the button of the unlocking mechanism is not actuated.
Figure 8 shows another top-sectional view of the partial portion of the manually adjustable headrest assembly of Figure 7, wherein the button of the unlocking mechanism is actuated and the unlocking moving member, configured as a pusher, has moved.
Figure 9 shows a schematic perspective view of the unlocking mechanism and the locking mechanism of the first embodiment of the manually front-rear adjustable headrest assembly according to the present disclosure, wherein the locking mechanism is in the locked state.
Figure 10 shows another schematic perspective view of the unlocking mechanism and the locking mechanism shown in Figure 9, wherein the locking mechanism is in the unlocked state.
Figure 11 shows a schematic perspective view of a partial portion of the first embodiment of the manually front-rear adjustable headrest assembly according to the present disclosure.
Figures 12 to 14 show schematic views of different states during forward adjustment of the manual front-rear adjustment mechanism with a locking mechanism for manual adjustment of the first embodiment of the manually front-rear adjustable headrest assembly according to the present disclosure,.
Figures 15 to 17 show schematic views of different states during unlocking and rearward adjustment of the manual front-rear adjustment mechanism with a locking mechanism for manual adjustment of the first embodiment of the manually front-rear adjustable headrest assembly according to the present disclosure.
Figure 18 shows a schematic detail view of the arrangement of a stopper configured at least to limit lateral movement of the first locking member, together with the first and second locking members.
Figure 19 shows a schematic view of the engagement structure of the locking mechanism of the first embodiment of the manually front-rear adjustable headrest assembly according to the present disclosure.
Figure 20 shows a schematic perspective view of a partial portion of a second embodiment of the manually front-rear adjustable headrest assembly according to the present disclosure.
Figure 21 shows a schematic exploded view of the partial portion of the second embodiment of the manually front-rear adjustable headrest assembly shown in Figure 20.
Figures 22 and 23 show schematic perspective views of the first locking member of the locking mechanism of the second embodiment of the manually front-rear adjustable headrest assembly according to the present disclosure, wherein the first locking member is configured as a sliding locking plate, viewed from different angles.
Figures 24 and 25 show schematic perspective views of the unlocking slider of the unlocking mechanism of the second embodiment of the manually front-rear adjustable headrest assembly according to the present disclosure, viewed from different angles.
Figure 26 shows a schematic perspective view of the cooperation structure between the unlocking slider and the sliding locking plate of the second embodiment of the manually front-rear adjustable headrest assembly according to the present disclosure.
Figure 27 shows a schematic view of the engagement structure of the locking mechanism of the second embodiment of the manually front-rear adjustable headrest assembly according to the present disclosure.
Figure 28 shows a schematic perspective view of a partial portion of the second embodiment of the manually front-rear adjustable headrest assembly according to the present disclosure, wherein the locking mechanism is in the locked state.
Figure 29 shows another schematic perspective view of the partial portion shown in Figure 28, wherein the locking mechanism is in the unlocked state.
Figure 30 shows a schematic perspective view of the partial portion shown in Figure 28, viewed from another angle.
Figure 31 shows a schematic perspective view of a third embodiment of the manually front-rear adjustable headrest assembly according to the present disclosure, comprising a manual front-rear adjustment mechanism and a manual up-down adjustment mechanism, wherein the front-rear adjustment mechanism is used for manual adjustment and includes a locking mechanism.
Figure 32 shows a schematic exploded view of the manual front-rear adjustment mechanism, the manual up-down adjustment mechanism, and the unlocking mechanism of the third embodiment shown in Figure 31, wherein the front-rear adjustment mechanism is used for manual adjustment and includes a locking mechanism.
Figure 33 shows a schematic perspective view of the unlocking mechanism and the locking mechanism of the third embodiment of the manually front-rear adjustable headrest assembly according to the present disclosure, wherein the locking mechanism is in the locked state.
Figure 34 shows another schematic perspective view of the unlocking mechanism and the locking mechanism shown in Figure 33, wherein the locking mechanism is in the unlocked state.
Figure 35 shows a schematic top-sectional view of a partial portion of the unlocking mechanism and the locking mechanism of Figure 33.
Figure 36 shows a schematic top-sectional view of a partial portion of the unlocking mechanism and the locking mechanism of Figure 34.
Figure 37a shows a schematic perspective view of a fourth embodiment of a headrest assembly according to the present disclosure, comprising a manual front-rear adjustment mechanism and an electric up-down adjustment mechanism; for clarity, the fixed base of the up-down adjustment mechanism is omitted.
Figure 37b shows a schematic exploded view of the fourth embodiment of the headrest assembly according to the present disclosure, comprising a manual front-rear adjustment mechanism and an electric up-down adjustment mechanism.
Figures 38a and 38b show schematic perspective views of the electric front-rear adjustment mechanism with a front-rear adjustment drive device of a first embodiment of an electrically front-rear adjustable headrest assembly according to the present disclosure, viewed from different rearside angles.
Figure 38c shows a schematic exploded view of the electric front-rear adjustment mechanism with a front-rear adjustment drive device shown in Figure 38a.
Figure 39 shows a schematic perspective view of an electric front-rear adjustment mechanism and a manual up-down adjustment mechanism of a second embodiment of an electrically front-rear adjustable headrest assembly according to the present disclosure, wherein the front-rear adjustment mechanism includes a front-rear adjustment drive device.
Figure 40 shows a schematic exploded view of the electric front-rear adjustment mechanism with a front-rear adjustment drive device and the manual up-down adjustment mechanism shown in Figure 39.
Figure 41 shows a schematic sectional view of the electrically adjustable headrest assembly with the electric fore-aft adjustment mechanism, including the fore-aft adjustment drive device, in the retracted state as depicted in Figure 39.
Figure 42 shows a schematic sectional view of the electrically adjustable headrest assembly with the electric fore-aft adjustment mechanism, including the fore-aft adjustment drive device, in the extended state as depicted in Figure 39.
Figure 43 shows a schematic perspective view of an electric front-rear adjustment mechanism and an electric up-down adjustment mechanism of a third embodiment of an electrically front-rear adjustable headrest assembly according to the present disclosure, wherein the front-rear adjustment mechanism and the up-down adjustment mechanism are each provided with respective adjustment drive devices.
Figure 44 shows a schematic exploded view of the electric front-rear adjustment mechanism and the electric up-down adjustment mechanism with their respective adjustment drive devices shown in Figure 43.
Figure 45 shows a schematic sectional view of the electric front-rear adjustment mechanism and the electric up-down adjustment mechanism with their respective adjustment drive devices shown in Figure 43.

### Detailed Description of Drawings

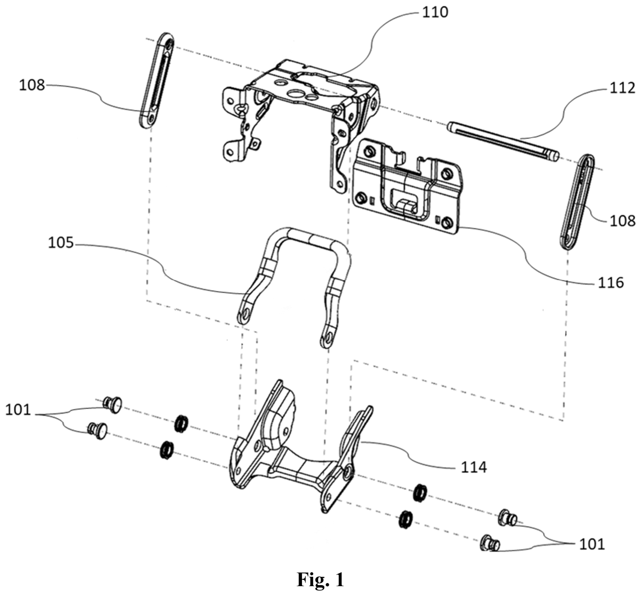

First, with reference to Figure 1, a schematic exploded view of one embodiment of the front-rear adjustment mechanism according to the present disclosure is described.

The front-rear adjustment mechanism is generally configured as a four-bar linkage assembly. The front-rear adjustment mechanism primarily comprises a base, an upper connecting plate 110, and a front linkage 105 and a rear linkage 108, each being hingedly or hingeably connected to both the base and the upper connecting plate 110. The base may include a lower connecting plate 114 and a backrest connecting plate 116 firmly connected-particularly welded-to the lower connecting plate 114, wherein the lower connecting plate 114 of the base is hingedly connected to the front linkage 105 and the rear linkage 108. The upper connecting plate 110 can be used either to connect to a headrest cover (in cases involving only front-rear adjustment) or to connect to components for up-down adjustment (in cases involving both front-rear and up-down adjustment). In this four-bar linkage assembly, the backrest connecting plate 116 and the lower connecting plate 114 are welded together to form the base or the fixed end. The rear linkage 108 and the upper connecting plate 110 form a revolute pair via a connecting rotary shaft 112, wherein the rear linkage 108 is welded and fixed to the connecting rotary shaft 112. The lower connecting plate 114 forms revolute pairs with the rear linkage 108 and the front linkage 105 respectively via stepped rivets 101, wherein bushings are respectively fitted onto the stepped rivets 101. The hinge structure between the front linkage 105 and the upper connecting plate 110 is not shown in Figure 1. It can be envisaged that a structure or component for hingedly connecting the front linkage 105 to the upper connecting plate 110 may be provided in the upper region of the front linkage 105. Multiple hinge points may exist in this four-bar linkage assembly.

To achieve better resistance to deformation, the front linkage 105 is constructed as a hollow tubular profile component. Furthermore, the front linkage 105 is configured as U-shaped, comprising two side legs and an intermediate connecting portion that connects the two side legs or comprising an intermediate connecting portion with two side legs extending from its ends. This U-shaped structure provides corresponding arrangement space for the lead screw of a motor potentially used for automatic front-rear adjustment, thereby avoiding encroachment of the lateral space of the front linkage 105.

The front-rear adjustment mechanism adopts a modular design, enabling it not only to be extended for manual front-rear adjustment functionality but also for electric front-rear adjustment functionality. To this end, the front-rear adjustment mechanism is provided not only with a first connection point configured for cooperation with a manual front-rear adjustment function but also simultaneously with a second connection point configured for cooperation with an electric front-rear adjustment function. The first connection point is used to connect a locking mechanism that provides locking only for rearward adjustment during manual front-rear adjustment, and the second connection point is used to connect a front-rear adjustment drive device. The first connection point may be located at or near any one of the multiple hinge points, while the second connection point may be located on the main body of the front linkage 105, the rear linkage 108, the base, or the upper connecting plate 110. Preferably, the first connection point may be located at the hinge point between the front linkage 105 and the upper connecting plate 110. Moreover, preferably, the second connection point is located on the intermediate connecting portion of the U-shaped front linkage 105.

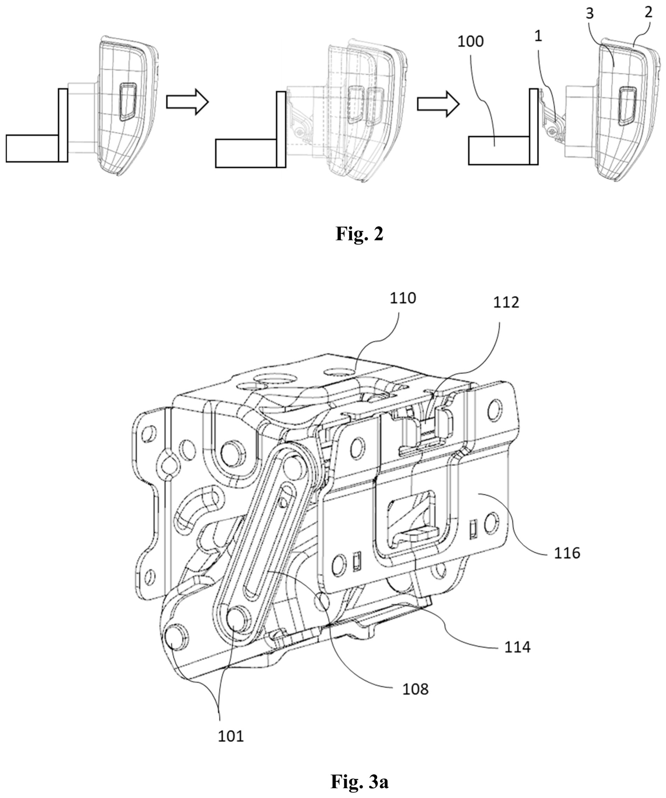

Next, with reference to Figure 2, the overall concept of the manually front-rear adjustable headrest assembly for vehicle seats according to the present disclosure is described. In the present disclosure, this manually front-rear adjustable headrest assembly includes at least a front-rear adjustment mechanism configured to adjust the headrest cover, which comprises a front cover 2 and a rear cover 3, in the front-rear direction, wherein the front-rear adjustment mechanism is configured as a four-bar linkage assembly 1, and our-bar linkage assembly 1 is fixed to a seat frame 100 at its rear portion. Figure 2 illustrates the operating principle of the manually front-rear adjustable headrest assembly according to the present disclosure during forward adjustment (including collision scenarios). By means of a unidirectional locking design concept, a function is achieved whereby no unlocking is required during forward adjustment, and unlocking is only required during rearward adjustment, wherein during forward adjustment, the headrest assembly can be adjusted without unlocking, and at the foremost position shown at the far right in Figure 2, it does not unintentionally unlock as occurs in the prior art; wherein unlocking of the manually front-rear adjustable headrest assembly is required when adjusting it rearward. In the present disclosure, "adjustment" may refer on one hand to active manual adjustment performed by an occupant, and on the other hand to adjustment movement caused by inertia during a collision. To achieve this unidirectional locking function, the manually front-rear adjustable headrest assembly according to the present disclosure further includes a locking mechanism for locking the adjustment movement of the front-rear adjustment mechanism, and an unlocking mechanism. In the manually front-rear adjustable headrest assembly, the locking mechanism is connected to the front-rear adjustment mechanism at the first connection point. Preferably, to achieve the unidirectional locking function, the locking mechanism is configured not to lock the forward adjustment movement of the front-rear adjustment mechanism, thereby allowing the front-rear adjustment mechanism to adjust the headrest cover forward, while the locking mechanism is configured to lock the rearward adjustment movement to restrict the front-rear adjustment mechanism from adjusting the headrest cover rearward, and wherein the unlocking mechanism cooperates with the locking mechanism and is configured to unlock the locking mechanism when the front-rear adjustment mechanism adjusts the headrest cover rearward, thereby enabling the front-rear adjustment mechanism to adjust the headrest cover rearward. By providing the manually front-rear adjustable headrest assembly according to the present disclosure, it is possible, for example, in a collision scenario, to avoid automatic unlocking and subsequent return to the rearmost position (the leftmost position shown in Figure 1) after moving due to inertia to the foremost position (the rightmost position shown in Figure 1) upon a forward impact.

Next, with reference to Figures 3a to 4, the arrangement of the manual front-rear adjustment mechanism and the locking mechanism of the first embodiment of the manually front-rear adjustable headrest assembly according to the present disclosure is described.

As shown in Figures 3a to 4, the front-rear adjustment mechanism for manual adjustment of the manually front-rear adjustable headrest assembly is generally similar to the front-rear adjustment mechanism shown in Figure 1, with the difference being: in the front-rear adjustment mechanism of the manually front-rear adjustable headrest assembly, a reset spring 109 is respectively arranged inside on both sides of the rear linkage 108, wherein the reset springs 109 are respectively sleeved onto the connecting rotary shaft 112 and used to provide resetting assistance during rearward adjustment. Additionally, there is a difference in the hinge structure between the front linkage 105 and the upper connecting plate 110; wherein in the front-rear adjustment mechanism of the manually front-rear adjustable headrest assembly, the corresponding components for the unlocking mechanism are also formed when hinging.

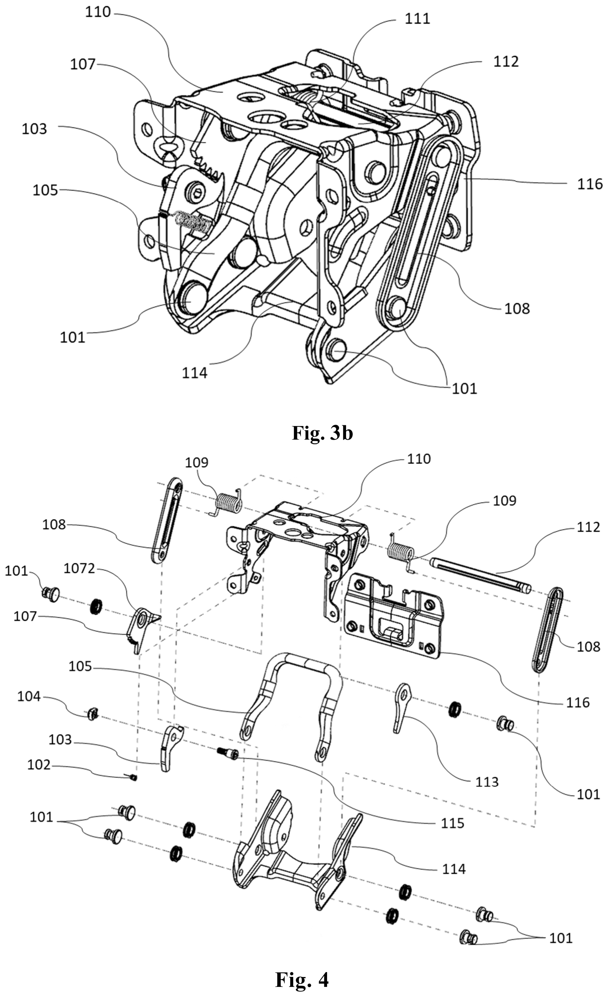

For ease of describing the hinge structure, the unlocking mechanism of the first embodiment is first described with reference to Figures 3b and 4. The locking mechanism includes a first locking member and a second locking member, wherein the first locking member can engage with the second locking member in a resettable manner, wherein the first locking member is provided at one end with a first mating toothed portion, and the second locking member has a second mating toothed portion, wherein the first mating toothed portion and the second mating toothed portion are configured such that the forward adjustment movement of the front-rear adjustment mechanism can drive the movement of the second locking member, causing the second mating toothed portion to automatically disengage from the first mating toothed portion, thereby allowing the front-rear adjustment mechanism to adjust the headrest cover forward; whereas the rearward adjustment movement of the front-rear adjustment mechanism causes the first mating toothed portion to remain engaged with the second mating toothed portion, thereby restricting the front-rear adjustment mechanism from adjusting the headrest cover rearward. In this unlocking mechanism, the first locking member is configured as a rotary locking plate 103, while the second locking member is configured as a first mating locking plate 107, wherein the rotary locking plate 103 has a rotary locking plate-locking portion 1033 as the first mating toothed portion, and the first mating locking plate 107 has a first mating locking plate-locking tooth 1071 as the second mating toothed portion. Furthermore, the first mating locking plate 107 also has a linkage hinge portion for hingedly connecting the front linkage 105 to the upper connecting plate 110. The first mating locking plate 107 may be arranged on the side region of the intermediate connecting portion of the front linkage 105-particularly near the U-shaped structure. The rotatable rotary locking plate 103 and the first mating locking plate 107 form a first ratchet structure. For this purpose, the rotary locking plate-locking portion 1033 of the rotatable rotary locking plate 103 is configured as a protruding hook-shaped portion, wherein the shape of the hook-shaped portion of the rotatable rotary locking plate 103 and the shape of the first mating locking plate-locking tooth 1071 of the first mating locking plate 107 are designed such that the rotary locking plate-locking portion 1033 of the rotatable rotary locking plate 103 and the first mating locking plate-locking tooth 1071 of the first mating locking plate 107 form a first ratchet structure. When the front-rear adjustment mechanism adjusts the headrest cover forward, it can drive the movement of the first mating locking plate 107, causing the rotary locking plate 103 to rotate and its first mating toothed portion to disengage from the second mating toothed portion. Herein, the rotatable rotary locking plate 103 may be functionally constructed similarly to a pawl, while the first mating locking plate 107 may be functionally constructed similarly to a ratchet.

In an embodiment of the arrangement of the front-rear adjustment mechanism and the locking structure of the manually front-rear adjustable headrest assembly shown in Figures 3b and 4, the front linkage 105 is fixedly welded on both sides at its upper portion respectively to the second locking member configured as the first mating locking plate 107 and the front linkage hinge plate 113, and then forms a revolute pair with the upper connecting plate 110 via the linkage hinge portion of the first mating locking plate 107 and the linkage hinge portion of the front linkage hinge plate 113 itself through stepped rivets 101, wherein bushings are also respectively sleeved onto the corresponding stepped rivets 101. That is, herein the second locking member simultaneously achieves the functions of locking and hinging. Additionally, to increase connection strength, the first mating locking plate 107 has a protrusion 1072 extending laterally in its transverse direction from the side to increase the connection area between the first mating locking plate 107 and the front linkage 105. Correspondingly to the arrangement position of the first mating locking plate 107, as shown in Figures 3b and 4, the first locking member configured as the rotary locking plate 103 is rotatably disposed on a connection point of the upper connecting plate 110, such as a rotation connection hole. For this purpose, a nut 104 and a stepped screw 115 are also provided for hinging the rotary locking plate 103 to the upper connecting plate 110. Moreover, to achieve the resettable engagement between the first mating toothed portion of the first locking member configured as the rotary locking plate 103 and the second mating toothed portion of the second locking member configured as the first mating locking plate 107, a rotary locking plate-resetting tension spring 102 is also provided, which is connected at one end to the upper connecting plate 110 and at the other end to a portion of the first locking member opposite to the first mating toothed portion.

It should be noted that besides the arrangement of the locking mechanism as shown in Figures 3b or 4, other arrangements can also be envisaged. For example, the second mating toothed portion on the first mating locking plate 107 could also be moved to other hinge points of the four-bar linkage assembly 1 or nearby. For instance, the tooth feature of the second mating toothed portion of the second locking member can be provided at the lower hinge point of the front linkage 105 by welding or integration. Accordingly, the first locking member would no longer be hinged to the upper connecting plate 110 but rather to the lower connecting plate 114 to achieve the cooperation between the first mating toothed portion of the first locking member and the second mating toothed portion of the second locking member. At this time, the original first mating locking plate 107 could be replaced by the front linkage hinge plate 113, i.e., herein the front linkage 105 would be hinged to the upper connecting plate 110 through the front linkage hinge plates 113 on both sides. Furthermore, besides the front linkage 105, it is also conceivable to arrange the locking mechanism at the hinge points of the rear linkage 108 with the upper connecting plate 110 or the lower connecting plate 114 or nearby.

In summary, the second locking member configured as the first mating locking plate 107 is disposed on either the front linkage 105 or the rear linkage 108, so that the second mating toothed portion is disposed close to any one of the multiple hinge points, wherein when the second mating toothed portion is close to the upper hinge point, the first locking member configured as the rotary locking plate 103 is rotatably disposed on the upper connecting plate 110; whereas when the second mating toothed portion is close to the lower hinge point, the first locking member is rotatably disposed on the base, especially on the lower connecting plate 114 of the base.

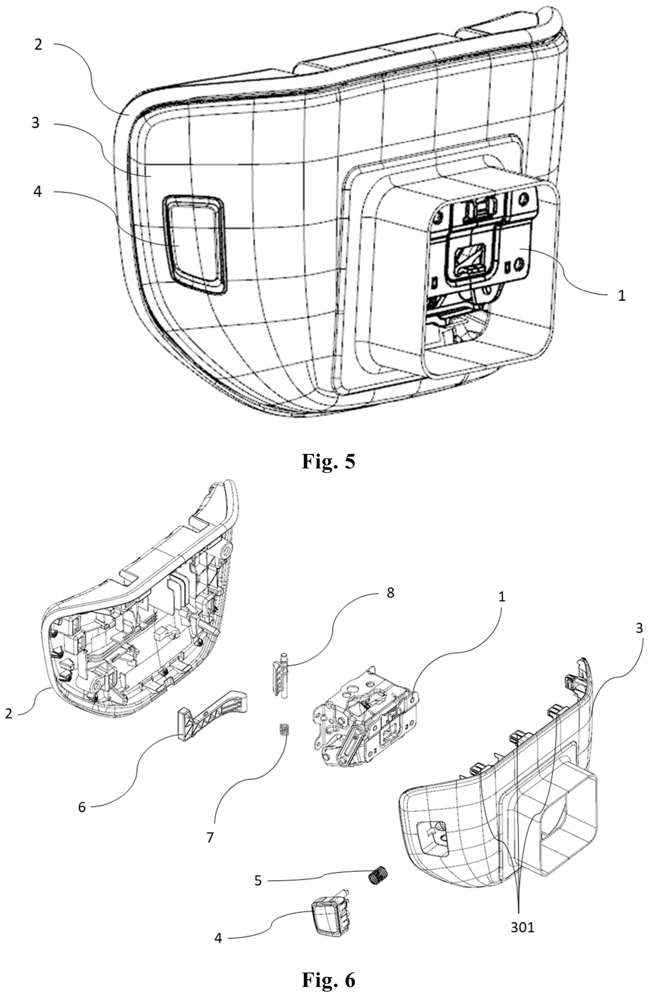

Next, with reference to Figures 5 to 11, the arrangement and operation principle of the unlocking mechanism, the locking mechanism, and the front-rear adjustment mechanism of the first embodiment of the manually front-rear adjustable headrest assembly according to the present disclosure are described.

As shown in Figures 5 and 6, the manually front-rear adjustable headrest assembly further includes a headrest cover comprising a front cover 2 and a rear cover 3. The four-bar linkage assembly 1 is fixed onto the front cover 2 by screws, while the rear cover 3 is fixed to the front cover 2 by plastic clips. The unlocking mechanism includes a push member 6 as an unlocking moving member and an intermediate transmission member configured as a rotary transmission member 8, which cooperates with the rotary locking plate 103. The push member 6 can be pushed in a first direction and thereby drive the rotary transmission member 8 to rotate, subsequently driving the rotary locking plate 103 to rotate about a first rotational axis extending in the first direction. Herein, the first direction may be the lateral direction of the manually front-rear adjustable headrest assembly or the front-rear adjustment mechanism. To achieve manual manipulation of the push member 6, the unlocking mechanism further includes a button 4 and a button-reset spring 5 for resetting the button. The button 4 is fixed to the rear cover 3 by plastic clips.

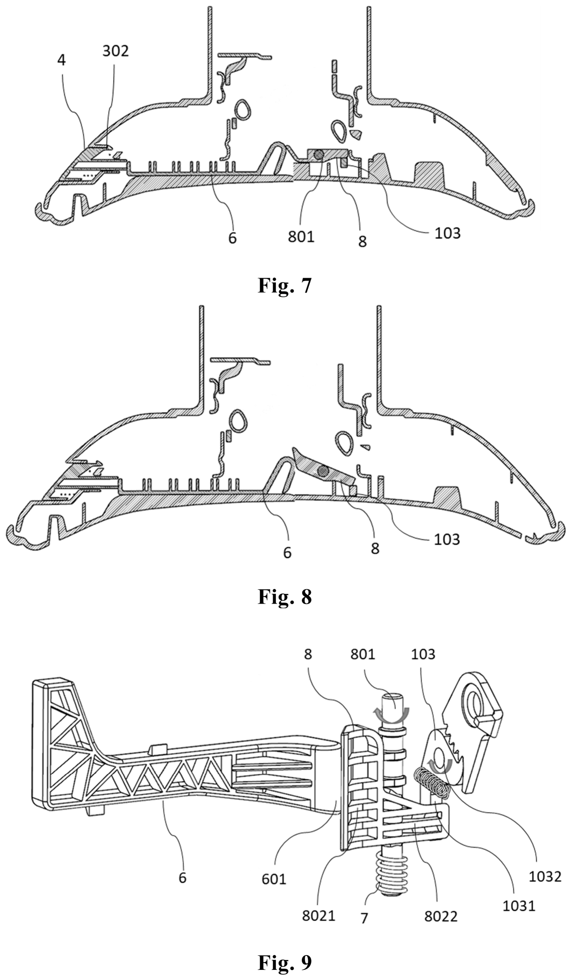

From Figures 7 to 11, it can be clearly seen that when force is applied to the button 4, the button 4 slides, for example, to the right through a button frame 302, thereby generating a pushing force on the push member 6. The push member 6 is subjected to force and pushes the rotary transmission member 8, and the rotary transmission member 8, through rotation of the rotary shaft 801, disengages the first locking member configured as the rotary locking plate 103, thereby unlocking the front-rear adjustment mechanism configured as the four-bar linkage assembly 1. To achieve this rotational disengagement, a first extension portion 8021 and a second extension portion 8022 are respectively provided on the rotary shaft 801 for cooperating with the push member 6 and the rotary locking plate 103. Specifically, as shown in Figures 9 to 11, under the action of pushing force, the push member 6 moves, pushing the first extension portion 8021 of the rotary transmission member 8 via a push plate sliding portion 601, causing the rotary shaft 801 to rotate, followed by the second extension portion 8022 acting on the rotary locking plate-unlocking portion 1031 and applying a force that produces a disengaging action. Under the effect of this force, the rotary locking plate 103 rotates about the rotary locking plate-rotation center 1032 or about a first rotational axis extending in the first direction, thereby completing the unlocking action. After the pushing force is removed, the rotary transmission member 8 resets via a rotary transmission member-resetting torsion spring 7, and the rotary locking plate 103 resets via the rotary locking plate-resetting tension spring 102.

In an unillustrated embodiment, for the intermediate transmission member, besides the aforementioned rotary intermediate transmission member, a translational intermediate transmission member can also be envisaged. In the case of such a translational intermediate transmission member, the movement of the push member 6 in the first direction can drive the translational intermediate transmission member to translate, thereby driving the rotary locking plate 103 to rotate. Particularly, the push member 6 may cooperate with the translational intermediate transmission member through a first inclined surface structure, such that the movement of the push member 6 in the first direction can drive the translational intermediate transmission member to translate in a second direction orthogonal to the first direction, wherein the translation of the translational intermediate transmission member in this second direction may apply a force to the rotary locking plate-unlocking portion 1031 of the rotary locking plate 103 to prompt the rotation of the rotary locking plate 103. This first inclined surface structure can convert movement in one direction into movement in another direction, particularly one orthogonal to the aforementioned direction, thereby also enabling the conversion of movement from the push member 6 to the rotation of the rotary locking plate 103.

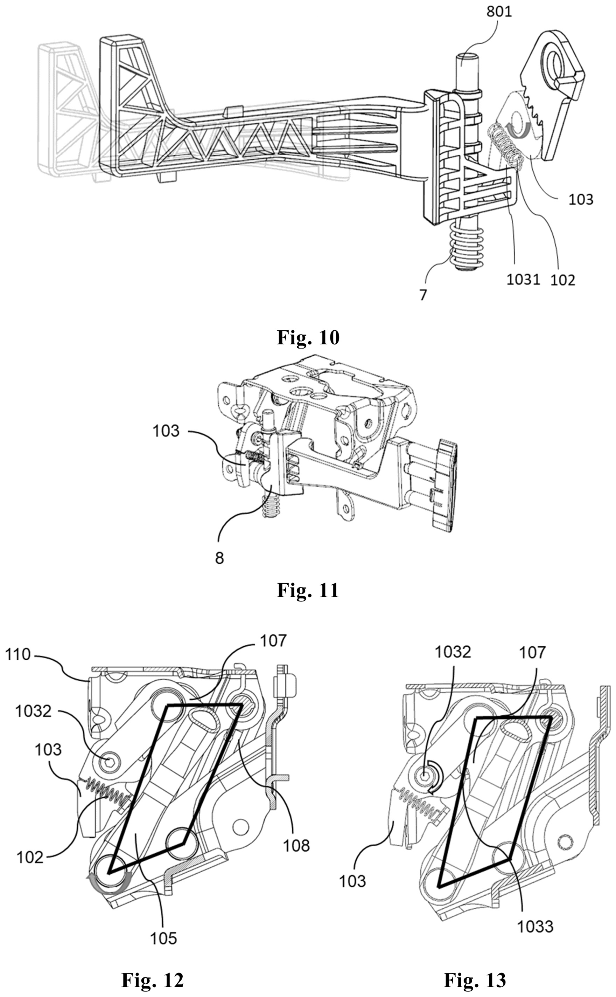

Next, with reference to Figures 12 to 17, the detent shifting movement principle of the front-rear adjustment mechanism configured as a four-bar linkage assembly 1.

As shown in Figures 12 to 14, during forward adjustment, unlocking can be omitted. The upper connecting plate 110 is subjected to a positive pulling force (e.g., the left-pointing pulling force shown in the figure), driving the front linkage 105 and the first mating locking plate 107 to rotate forward around the front lower linkage hinge point. The second mating toothed portion configured as the first mating locking plate-locking tooth 1071 drives the first mating toothed portion configured as the rotary locking plate-locking portion 1033 to rotate about the rotary locking plate-rotation center 1032 and disengage on its own, and then re-engages into the next notch of the first mating locking plate-locking tooth 1071 through the pulling force of the rotary locking plate-resetting tension spring 102, completing the detent shift adjustment. During this process, no unlocking is performed.

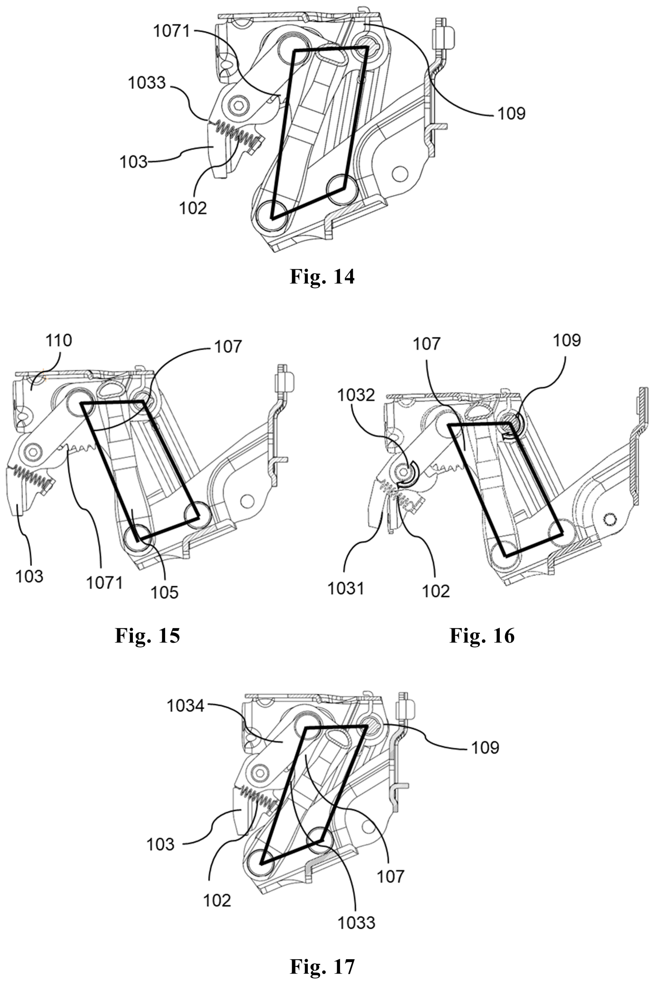

Furthermore, as shown in Figures 15 to 17, during rearward adjustment, unlocking is first performed via the unlocking mechanism. Under the action of the unlocking mechanism, the rotary locking plate-unlocking portion 1031 is subjected to force and thereby rotates to unlock about the rotary locking plate-rotation center 1032 in the direction indicated by the arrow. The upper connecting plate 110 is reset to the rearmost position by the rearward rotational pulling force of the return spring 109, or is reset to any detent position under manual control by the occupant, and the force acting on the rotary locking plate-unlocking portion 1031 ceases. Under the reverse pulling force of the rotary locking plate-resetting tension spring 102, the rotary locking plate 103 engages again with the first mating locking plate 107, completing the re-engagement and locking.

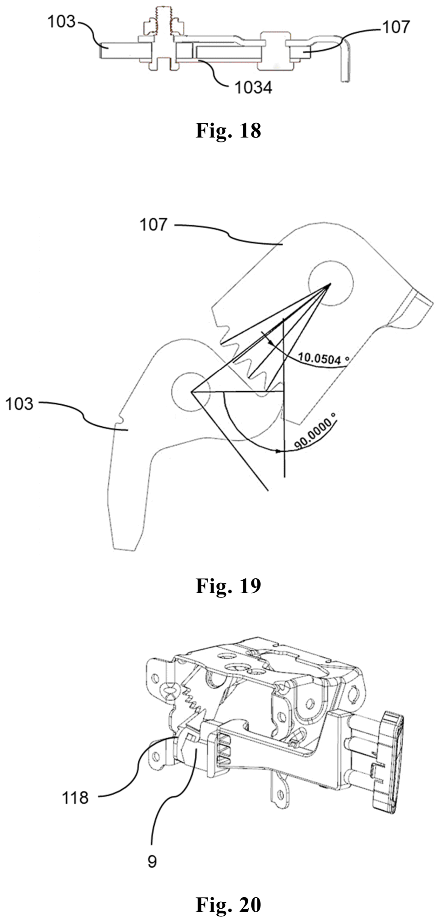

To prevent the rotatable rotary locking plate 103 from tooth disengagement during engagement with the first mating locking plate 107, a stopper 1034-particularly a fixed stopper bracket-is provided as shown in Figures 17 and 18. Both ends of this stopper 1034 are fixedly connected to the mounting point of the first mating locking plate 107 and the installation point of the rotary locking plate 103, thereby fixing and constraining the rotary locking plate 103 and the first mating locking plate 107 at an intermediate relative position and preventing lateral displacement during adjustment-especially during collision-and avoids tooth disengagement between the rotary locking plate 103 and the first mating locking plate 107.

To achieve advantageous locking and unlocking of the first ratchet structure formed by the corresponding mating toothed portions of the first locking member configured as the rotary locking plate 103 and the second locking member configured as the first mating locking plate 107, as shown in Figure 19, when the rotatable rotary locking plate 103 is engaged with the first mating locking plate 107 and in a stationary state, the axis line passing through the movement axis of the rotary locking plate 103 forms a 90° angle with the overlapping surface of the first mating locking plate 107, on which the first mating toothed portion and the second mating toothed portion overlap. When the angle exceeds 90°, the contact becomes point-to-line contact, resulting in a low coefficient of friction that is unfavorable for locking; whereas when the angle is less than 90°, a negative angle occurs, causing excessive locking force that is unfavorable for the unlocking of the rotary locking plate 103 from the first mating locking plate 107. Additionally, as shown in Figure 19, the tooth positions are referenced to the circularity line of the movement axis of the first mating locking plate 107, with an angular spacing of 10° between teeth.

Next, with reference to Figures 20 to 30, the arrangement and operating principle of the front-rear adjustment mechanism, the locking mechanism, and the unlocking mechanism of the second embodiment of the manually front-rear adjustable headrest assembly according to the present disclosure is described.

The front-rear adjustment mechanism of the second embodiment of the manually front-rear adjustable headrest assembly according to the present disclosure is structurally substantially identical to that of the first embodiment, with the difference lying in the connection structure for the first locking member of the locking mechanism. Therefore, for the front-rear adjustment mechanism, except for the connection structure for the first locking member of the locking mechanism, other structural features may be referred to in the description above.

In the first embodiment, the first locking member, as the rotary locking plate 103, is connected via a rotary connection structure to the corresponding component of the front-rear adjustment mechanism , while in the second embodiment, the movement mode of the first locking member is changed to translational movement, and thus the connection structure of the front-rear adjustment mechanism for this first locking member is correspondingly modified. This will be described in greater detail below.

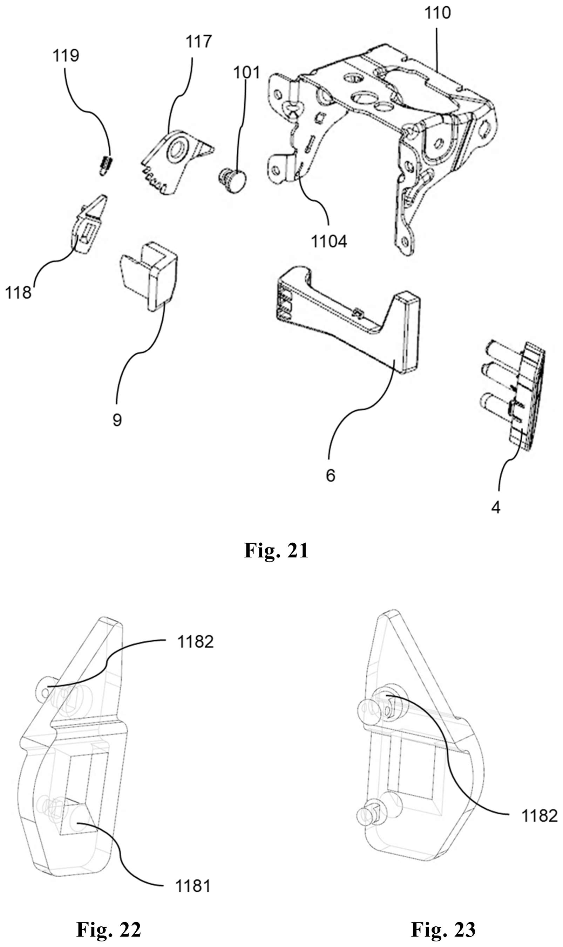

As shown in Figures 21 to 27, in the second embodiment, the unlocking mechanism likewise includes a button 4. Furthermore, the unlocking mechanism includes a push member 6 and an unlocking slider 9, wherein the movement of the push member 6 drives the unlocking slider 9 to move in the same direction. In this embodiment, the push member 6 and the unlocking slider 9 together form the unlocking moving member according to the present disclosure; that is, in the second embodiment, the unlocking moving member is constructed in two parts. Of course, in alternative embodiments, it is also conceivable to construct the push member 6 and the unlocking slider 9 as a single integrated part. The unlocking slider 9 has an unlocking slider sliding portion 901. Moreover, in the second embodiment, the locking mechanism includes a first locking member configured as a sliding locking plate 118 and a second locking member configured as a second mating locking plate 117. The sliding locking plate 118 likewise has a first mating toothed portion and further includes a sliding locking plate track 1181 for cooperation with the unlocking moving member-particularly the unlocking slider 9- of the unlocking mechanism and a sliding locking plate reset portion 1182 for cooperation with the connection structure of the front-rear adjustment mechanism, wherein the sliding locking plate reset portion 1182 can slide within an upper connecting plate slide slot 1104 and can be reset via a slider reset spring 119, wherein the slider reset spring 119 is connected at one end to the sliding locking plate reset portion 1182 and fixed at the other end to the upper connecting plate 110. It is also conceivable, of course, that when the sliding locking plate 118 is arranged on the base-particularly on the lower connecting plate 114 of the base-the slider reset spring 119 could instead be fixed on the other end to the base. Additionally, in the second embodiment, the second mating locking plate 117 also has a second mating toothed portion. Aside from this, the second mating locking plate 117 is structurally substantially identical to the first mating locking plate 107 of the first embodiment. The unlocking slider 9 of the unlocking moving member-particularly its unlocking slider sliding portion 901- and the sliding locking plate 118 configured as the first locking member-particularly its sliding locking plate track 1181-are engaged via a second inclined surface structure (i.e., an inclined-sliding structure formed by the unlocking slider sliding portion 901 and the sliding locking plate track 1181), such that the movement of the unlocking moving member-such as the push member 6 of the unlocking moving member and thus the unlocking slider 9-in a first direction, particularly the lateral direction of the manually front-rear adjustable headrest assembly, is able to drive the sliding locking plate 118 to translate in another second direction orthogonal to the first direction. This another second direction may differ from the aforementioned second direction. The translational movement in this another second direction should ensure that the sliding locking plate 118 can disengage from the second mating locking plate 117 when unlocking is required.

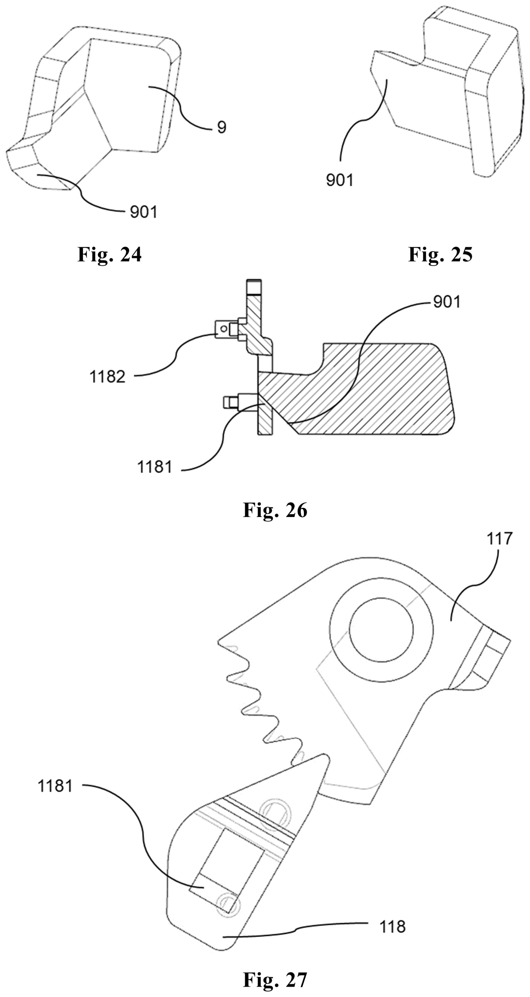

As shown in Figure 27, the corresponding mating toothed portions of the sliding locking plate 118 and the second mating locking plate 117 can form a second ratchet structure. Similarly, when the front-rear adjustment mechanism adjusts the headrest cover forward, it drives the second mating locking plate 117 to move, causing the sliding locking plate 118 to translate and its first mating toothed portion to automatically disengage from the second mating toothed portion of the second mating locking plate 117. In other words, when the front-rear adjustment mechanism adjusts the headrest cover forward, the sliding locking plate 118 automatically slides out to unlock; whereas when the front-rear adjustment mechanism is moved rearward without being unlocked, the sliding locking plate 118 remains locked in place. Depending on the specific application, the second mating toothed portion of the second mating locking plate 117 in the second embodiment may be identical to the second mating toothed portion of the first mating locking plate 107 in the first embodiment-in which case the second mating locking plate 117 and the first mating locking plate 107 are the same component-or alternatively, the second mating toothed portion of the second mating locking plate 117 may differ from that of the first mating locking plate 107 in the first embodiment, depending on the specific structure of the first mating toothed portion of the sliding locking plate 118.

As clearly seen in Figures 21 and 28 to 30, when the button 4 is subjected to force, thereby causing the push member 6 to move, which in turn pushes the unlocking slider 9. The unlocking slider sliding portion 901 is subjected to force that generates an obliquely downward pressure acting on the sliding locking plate track 1181, thereby driving the sliding locking plate 118 and the second mating locking plate 117 to disengage from each other, so as to complete the unlocking of the sliding locking plate 118 from the second mating locking plate 117. When the pushing force applied to button 4 disappears, the slider reset spring 119 drives the sliding locking plate reset portion 1182 to reset within the upper connecting plate slide slot 1104, so as to perform the locking of the sliding locking plate 118 onto the second mating locking plate 117.

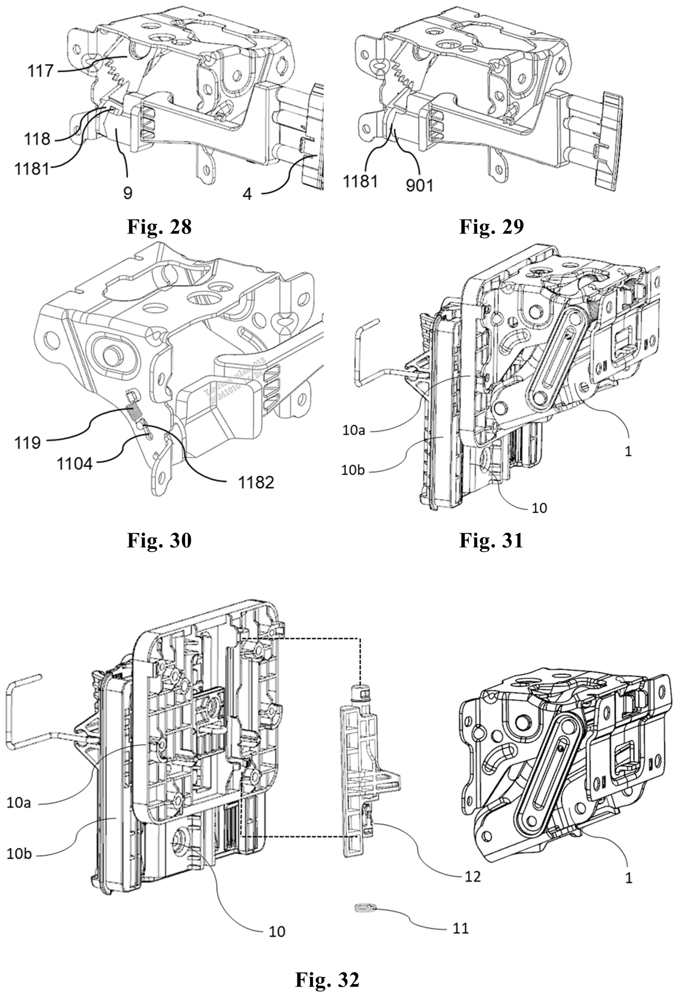

Next, with reference to Figures 31 to 36, the arrangement and operating principle of the structures related to the up-down adjustment mechanism in the third embodiment of the manually front-rear adjustable headrest assembly according to the present disclosure are described, which includes both a manual front-rear adjustment mechanism and a manual up-down adjustment mechanism.

As shown in Figures 31 to 36, the manually front-rear adjustable headrest assembly further includes an up-down adjustment mechanism 10. The up-down adjustment mechanism 10 includes a fixed base 10a and a moving part 10b, wherein the fixed base 10a is connected to the front-rear adjustment mechanism-particularly its upper connecting plate-and the moving part 10b is connected to the headrest cover, and wherein the moving part 10b is capable of sliding up and down relative to the fixed base 10a, thereby realizing up-down adjustment of the headrest cover. To achieve locking during up-down adjustment, multiple spaced-apart locking slots are provided on the fixed base 10a. An unlocking moving member configured as an unlocking wire member 10c cooperates with these locking slots, wherein when the unlocking wire member 10c engages with the locking slots, adjustment of the headrest cover by the up-down adjustment mechanism 10 is restricted; whereas when the unlocking wire member 10c disengages from the locking slots, adjustment of the headrest cover by the up-down adjustment mechanism 10 is permitted. For details of the specific structure of the locking slots, reference may be made to the description of similar locking slots in the applicant's Chinese patent CN202420598265.5. Additionally, the wire disclosed in Chinese patent CN202420598265.5 can serve as the unlocking moving member in the present application.

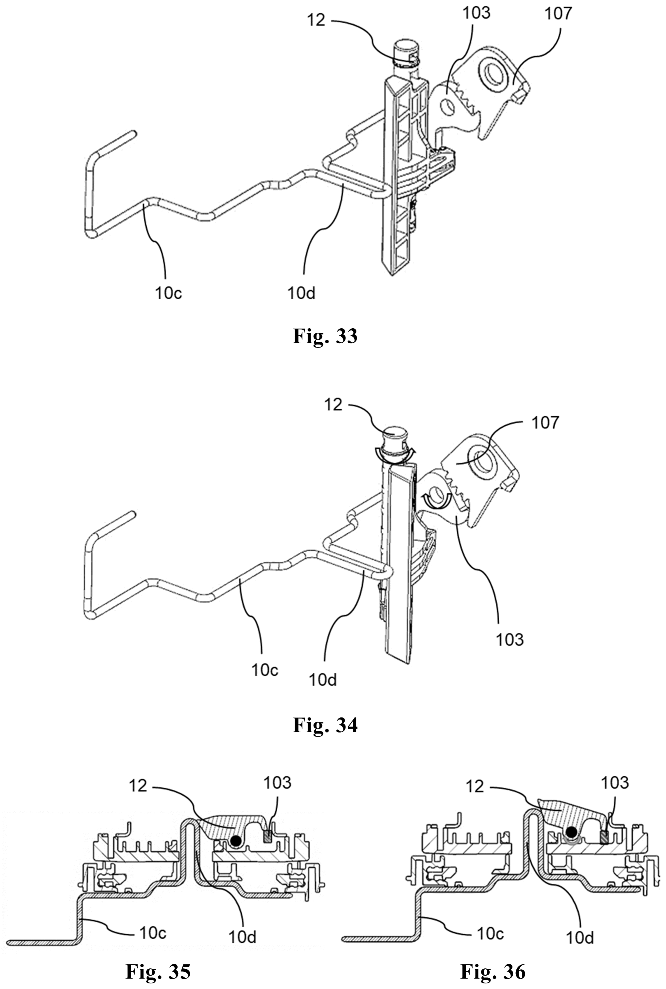

As clearly shown in Figures 33 to 34, the unlocking wire member 10c includes a protruding moving portion 10d-particularly a U-shaped protruding moving portion 10d. The movement of the unlocking wire member 10c in the first direction drives the protruding moving portion 10d to disengage from the locking slots, while simultaneously driving the first locking member-also configured as the rotary locking plate 103-to move so as to disengage from the second locking member-also configured as the first mating locking plate 107-thereby enabling both up-down adjustment of the headrest by the up-down adjustment mechanism 10 and rearward adjustment of the headrest by the front-rear adjustment mechanism. To this end, an additional rotary transmission member 12 may be provided, which can convert the linear movement of the unlocking wire member 10c into rotation of the rotary locking plate 103. To realize the reset of this additional rotary transmission member 12, an additional rotary transmission member-resetting torsion spring 11 is provided, as shown in Figure 32. It should be noted that in Chinese patent CN202420598265.5, the wire is used solely to unlock manual up-down adjustment. In the present disclosure, innovatively, a single unlocking wire member is used to unlock adjustments in two different directions-namely, not only up-down adjustment but also rearward adjustment-thus achieving a compound function using only one single unlocking wire member.

In other aspects, the structure of the third embodiment is substantially identical to that of the first embodiment, and thus reference may be made to the previous description of the corresponding structures of the first embodiment. Additionally, it is also conceivable that the structures of the locking mechanism, the unlocking mechanism, and their respective components may adopt the solution from the second embodiment.

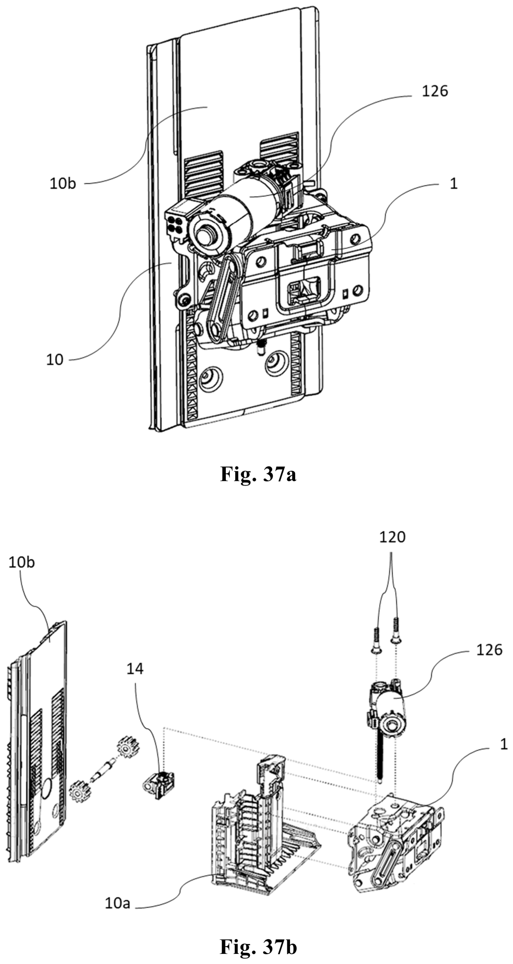

Next, with reference to Figures 37a and 37b, the arrangement and operating principle of the structures related to the up-down adjustment mechanism in the fourth embodiment of the manually front-rear adjustable headrest assembly according to the present disclosure are described, which includes a manual front-rear adjustment mechanism and an electric up-down adjustment mechanism.

To achieve electric adjustment of the up-down adjustment mechanism 10, in the fourth embodiment, as shown in Figures 37a and 37b, the up-down adjustment mechanism 10 further includes a second motor assembly. The motor assembly includes a second motor 126, a second lead screw rotatably connected to the second motor 126, and a second nut 14 provided on the second lead screw, wherein the second motor 126-for example, via motor bolts 120-is fixedly provided on the front-rear adjustment mechanism configured as the four-bar linkage assembly 1, and the front-rear adjustment mechanism is connected via screws to the fixed base 10a, thereby fixing the second motor 126 relative to the fixed base 10a. The second nut 14 is operatively connected to the moving part 10b-for instance, via a rack and pinion transmission mechanism. When the second motor 126 drives the second nut 14 to move along the second lead screw, the moving part 10b moves relative to the fixed base 10a. It is also conceivable, in an unillustrated embodiment, that the second lead screw motor 126 is fixed relative to the moving part 10b-for example, directly fixed on the moving part 10b-while the second lead screw nut 14 is operatively connected to the fixed base 10a. Moreover, it is also conceivable that the second nut 14 is fixedly operatively connected to the moving part 10b-particularly that the second nut 14 may be secured to the moving part 10b via screws.

In other aspects, the structure of the fourth embodiment is substantially identical to that of the first embodiment, and thus reference may be made to the previous description of the corresponding structures of the first embodiment. Additionally, it is also conceivable that the structures of the locking mechanism, the unlocking mechanism, and their respective components may adopt the solution from the second embodiment.

It should be noted here that the present disclosure uses the push member 6 or the combination of the push member 6 and the unlocking slider 9 as examples to describe the unlocking moving member. Those skilled in the art may conceive that, with appropriate modifications, the unlocking moving member could also be configured as a pulling member, and the related components could be adaptively restructured accordingly to accommodate pulling action.

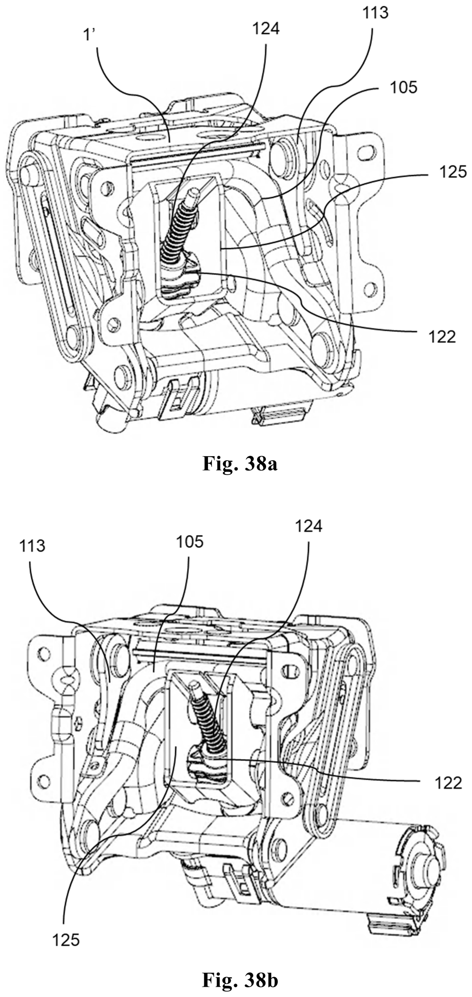

Next, with reference to Figures 38a to 38c, the arrangement of the front-rear adjustment mechanism and the front-rear adjustment drive device therefor in the first embodiment of the electrically front-rear adjustable headrest assembly according to the present disclosure is described.

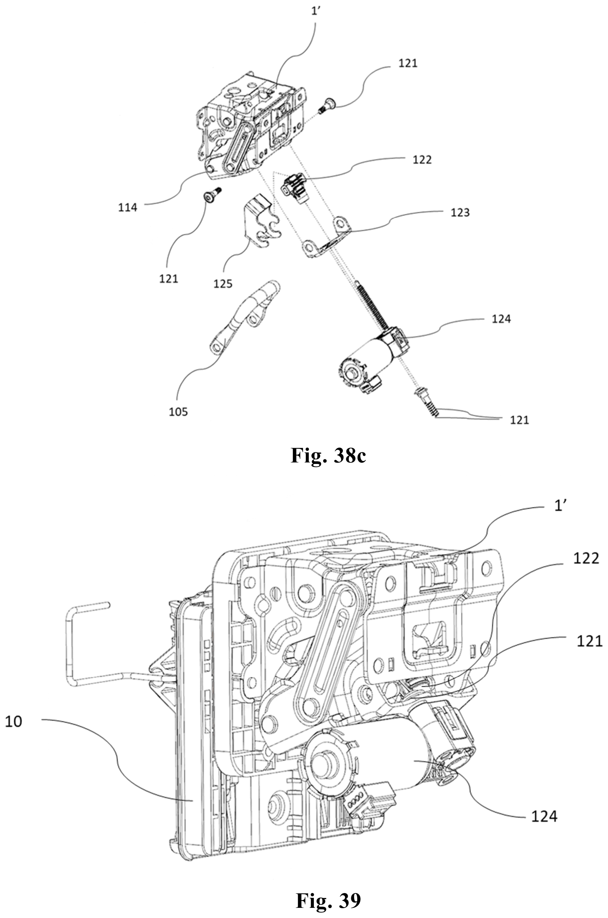

As shown in Figures 37a, 37b, and 38, the front-rear adjustment mechanism of the electrically front-rear adjustable headrest assembly is structurally substantially corresponding to the front-rear adjustment mechanism shown in Figure 1. In the first embodiment of the electrically front-rear adjustable headrest assembly, in the front-rear adjustment mechanism of the electrically front-rear adjustable headrest assembly, the front linkage 105 is welded on both sides at its upper portion to the front linkage hinge plates 113, and then forms a revolute pair with the upper connecting plate 110 via the linkage hinge portion of the first mating locking plate 107 and linkage hinge portion of the front linkage hinge plates 113 itself. The connection relationships of other components of the front-rear adjustment mechanism may be referred to in the earlier description of the front-rear adjustment mechanism in Figure 1.

The front-rear adjustment mechanism of the electrically front-rear adjustable headrest assembly is also configured as a four-bar linkage assembly, but this four-bar linkage assembly does not include a locking mechanism; therefore, it is herein referred to as another four-bar linkage assembly 1'. The second connection point for connecting the front-rear adjustment drive device is provided on the intermediate connecting portion of the front linkage 105 of this another four-bar linkage assembly 1'. The front-rear adjustment drive device is configured as a first motor assembly, wherein the first motor assembly, serving as the front-rear adjustment drive device, is connected to the another four-bar linkage assembly 1' at the intermediate connecting portion of the front linkage 105 serving as the second connection point. The first motor assembly includes a first motor 124, a first lead screw rotatably connected to the first motor 124, and a first nut 122 provided on the first lead screw. The first motor 124 is pivotally provided on the base-particularly on the lower connecting plate 114 of the base-and the first nut 122 is pivotally connected indirectly to the intermediate connecting portion of the front linkage 105 via an intermediate connecting plate 125. Specifically, the front linkage 105 is welded and fixed to the intermediate connecting plate 125, and the first nut 122 (also referred to as the front-rear nut) is inserted into a slot-particularly a circular slot-of the intermediate connecting plate 125 to perform pivotal or rotational movement. The first motor 124 (also referred to as the front-rear motor) is fixed to the another four-bar linkage assembly 1'-particularly to the lower connecting plate 114 thereof-via a cradle 123, and thus can perform pivotal or rotational movement on the lower connecting plate 114 via cradle bolts 121. The first motor 124 moves in the normal direction of the lead screw via the first nut 122, thereby driving the front linkage 105 to pivot, which in turn drives the front-rear adjustment mechanism of the electrically front-rear adjustable headrest assembly to perform front-rear movement.

Besides the arrangement for the second connection point mentioned above, other arrangements for the second connection point are also conceivable. For example, it is conceivable to provide the second connection point on the rear linkage 108, in which case the first motor 124 could be pivotally provided on the base or the upper connecting plate 110. Alternatively, it is conceivable to provide the second connection point on the base or the upper connecting plate 110, in which case the first motor could be pivotally provided on the front linkage 105 or the rear linkage 108.

Subsequently, with reference to Figures 38 to 42, the arrangement of the second embodiment of the electrically front-rear adjustable headrest assembly according to the present disclosure is described, which enables electric front-rear adjustment and manual up-down adjustment. The arrangement of the front-rear adjustment mechanism of the second embodiment of the electrically front-rear adjustable headrest assembly may be referred to in the previous description of the front-rear adjustment mechanism of the first embodiment of the electrically front-rear adjustable headrest assembly.

The second embodiment of the electrically front-rear adjustable headrest assembly also includes an up-down adjustment mechanism 10. Here, the up-down adjustment mechanism 10 is also fastened by screws to the another four-bar linkage assembly 1'. The arrangement and operating principle of the up-down adjustment mechanism 10 can be basically referred to the description of the up-down adjustment mechanism in the third embodiment of the manually front-rear adjustable headrest assembly as set forth above, with the difference being that in the third embodiment of the manually front-rear adjustable headrest assembly, the unlocking moving member configured as an unlocking wire member can unlock not only manual up-down adjustment but also manual front-rear adjustment, whereas in the second embodiment of the electrically front-rear adjustable headrest assembly, the up-down adjustment unlocking member is used solely to unlock manual up-down adjustment. This up-down adjustment unlocking member may also be configured as an unlocking wire member. Therefore, in the second embodiment of the electrically front-rear adjustable headrest assembly, no rotary shaft or related components or structures are provided.

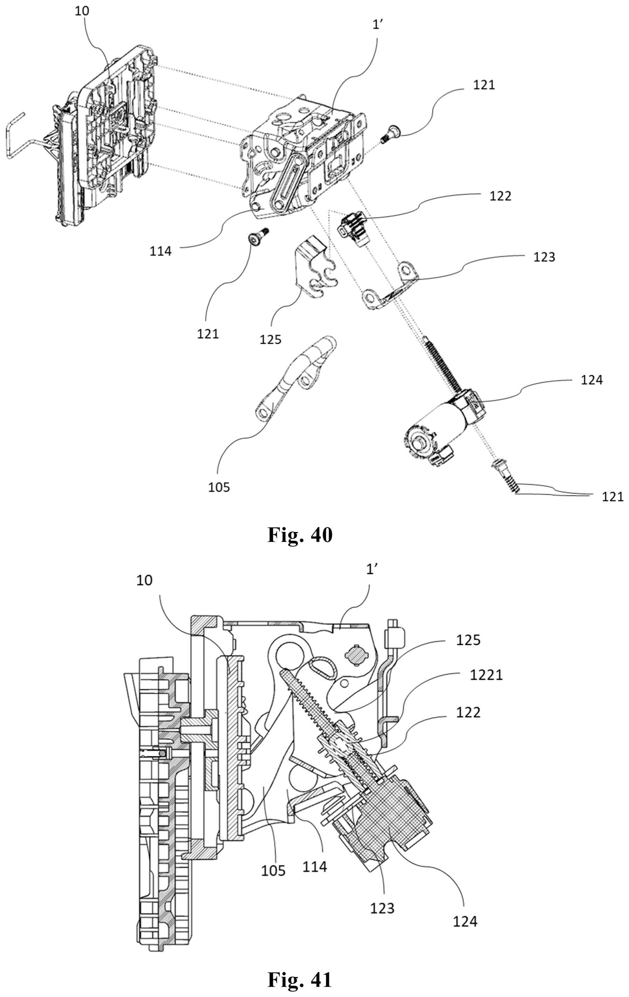

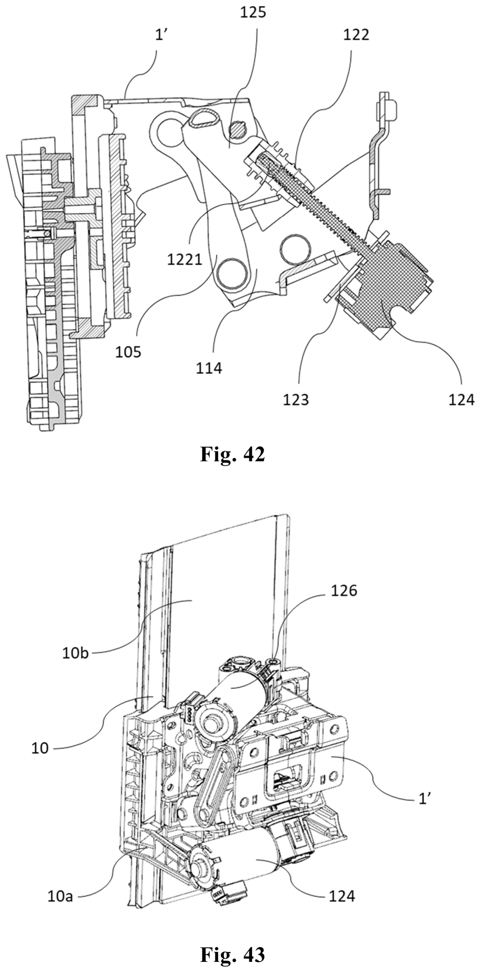

Here, comparing Figures 41 and 42 clearly shows the retracted state (Figure 41) and the extended state (Figure 42) of the front-rear adjustment mechanism under the driving action of the first motor assembly for the front-rear adjustment mechanism.

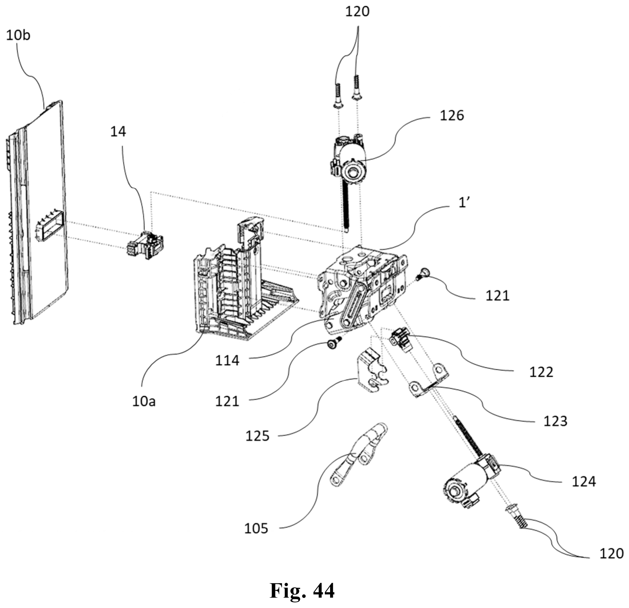

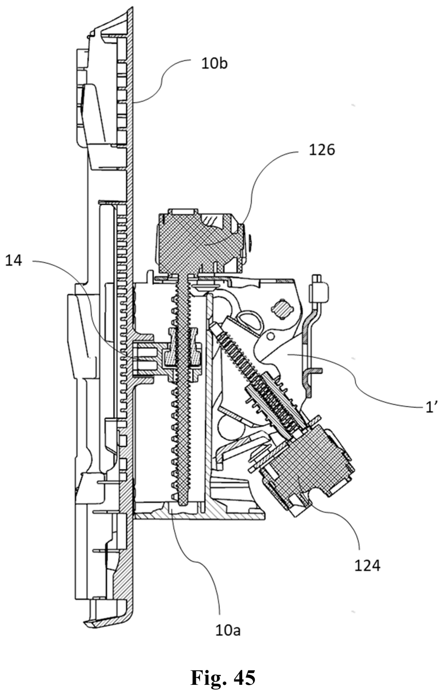

Finally, with reference to Figures 43 to 45, the arrangement of the third embodiment of the electrically front-rear adjustable headrest assembly according to the present disclosure is described, which enables both electric front-rear adjustment and electric up-down adjustment. The arrangement of the front-rear adjustment mechanism of the third embodiment of the electrically front-rear adjustable headrest assembly may be referred to in the previous description of the front-rear adjustment mechanism of the first embodiment of the electrically front-rear adjustable headrest assembly.

The third embodiment of the electrically front-rear adjustable headrest assembly also includes an up-down adjustment mechanism 10, which comprises a fixed base 10a and a moving part 10b, wherein the fixed base 10a is connected to the front-rear adjustment mechanism-particularly to its upper connecting plate 107-and the moving part 10b is connected to the headrest cover, and wherein the moving part 10b is capable of sliding up and down relative to the fixed base 10a, thereby realizing up-down adjustment of the headrest cover. To achieve electric up-down adjustment, the up-down adjustment mechanism 10 further includes a second motor assembly, which comprises a second motor 126, a second lead screw rotatably connected to the second motor 126, and a second nut 14 provided on the second lead screw, wherein the second motor 126 is fixedly provided-for example, via motor bolts 120-on the front-rear adjustment mechanism configured as the another four-bar linkage assembly 1', and the front-rear adjustment mechanism is connected via screws to the fixed base 10a. The second nut 14 is operatively-particularly fixedly-connected to the moving part 10b. When the second motor 126 drives the second nut 14 to move along the second lead screw, the moving part 10b moves relative to the fixed base 10a. Specifically, the motor bolt 120 for the second motor 126 (also referred to as the up-down motor) passes through the another four-bar linkage assembly 1' and is fixedly connected to the second motor 126. The another four-bar linkage assembly 1' is fixed by screws to the fixed base 10a-such as a fixed rack component-and the second nut 14 (also referred to as the up-down nut) is fixed by screws to the moving part 10b. Thus, the up-down adjustment mechanism can be driven to perform up-down adjustment movement by the second motor 126. Here, it is also conceivable that the second nut 14 is operatively connected to the moving part 10b indirectly via a rack-pinion transmission mechanism.

It should be noted that the terminology used herein is for the purpose of describing particular aspects only and is not intended to limit the disclosure. As used herein, the singular forms "a," "an," and "the" include plural referents unless the context clearly indicates otherwise. It should be understood that terms such as "comprise," "include," and other similar terms, when used in the application documents, specify the presence of stated operations, elements, and/or components but do not preclude the presence or addition of one or more other operations, elements, components, and/or combinations thereof. The term "and/or" as used herein includes all possible combinations of one or more of the listed items. In the description of the drawings, like reference numerals always denote like elements.

The thicknesses of elements in the drawings may be exaggerated for clarity. It should also be understood that if an element is referred to as being "on," "coupled to," or "connected to" another element, it may be directly on, coupled, or connected to the other element, or there may be one or more intervening elements between them. Conversely, if the expressions "directly on," "directly coupled to," and "directly connected to" are used herein, they indicate that there are no intervening elements. Other words used to describe the relationship between elements should be interpreted similarly, e.g., "between" vs. "directly between," "attached" vs. "directly attached," "adjacent" vs. "directly adjacent," etc.

Terms such as "top," "bottom," "above," "below," "upper," and "lower" are used herein to describe the relationship of one element, layer, or region to another as illustrated in the figures. It should be understood that these terms are intended to encompass other orientations of the device in addition to the orientation depicted in the figures.

It should be understood that although the terms "first," "second," etc., may be used herein to describe various elements, these elements should not be limited by these terms. These terms are used only to distinguish one element from another. Thus, a first element could be termed a second element without departing from the teachings of the present disclosure.

It should also be considered that all exemplary embodiments disclosed herein may be combined arbitrarily. Furthermore, all individual technical features in the present application may be combined arbitrarily, provided that the combined technical features are not mutually contradictory. All technically feasible combinations of features are regarded as technical content disclosed in the present application.

Finally, it should be emphasized that the above embodiments are provided solely for understanding the present disclosure and do not limit the scope of protection of the present disclosure. Modifications based on the above embodiments may be made by those skilled in the art without departing from the scope of protection of the present disclosure.

## Claims

1. A front-rear adjustment mechanism for adjusting a headrest cover of a vehicle seat in the front-rear direction, **characterized in that** the front-rear adjustment mechanism is provided not only with a first connection point configured for manual front-rear adjustment function but also simultaneously with a second connection point configured for electric front-rear adjustment function, wherein the first connection point is used to connect a locking mechanism that provides locking only for rearward adjustment during manual front-rear adjustment, and the second connection point is used to connect a front-rear adjustment drive device.

2. The front-rear adjustment mechanism according to claim 1, **characterized in that** the front-rear adjustment mechanism comprises: a base capable of being connected to a seat backrest; an upper connecting plate (110) capable of being connected to the headrest cover or to a fixed base (10a) of an up-down adjustment mechanism; and a front linkage (105) and a rear linkage (108) each hinged or hingeably connected to the base and the upper connecting plate, thereby forming multiple hinge points,
preferably, wherein the first connection point is located at or near any one of the multiple hinge points, while the second connection point is located on the main body of the front linkage, the rear linkage, the base, or the upper connecting plate,
preferably, wherein the front linkage is configured as U-shaped, the front linkage comprising two side legs and an intermediate connecting portion connecting the two side legs,
preferably, wherein the second connection point is located on the intermediate connecting portion of the U-shaped front linkage,
preferably, wherein the front linkage is configured as a hollow tubular profile member.

3. A manually front-rear adjustable headrest assembly, **characterized in that** it comprises the front-rear adjustment mechanism according to claim 1 or 2, and a locking mechanism for locking the rearward adjustment movement of the front-rear adjustment mechanism and an unlocking mechanism, wherein the locking mechanism is connected to the front-rear adjustment mechanism at the first connection point.

4. The manually front-rear adjustable headrest assembly according to claim 3, **characterized in that** the locking mechanism is configured not to lock the forward adjustment movement of the front-rear adjustment mechanism, thereby allowing the front-rear adjustment mechanism to adjust the headrest cover forward, but to lock the rearward adjustment movement of the front-rear adjustment mechanism, thereby restricting the front-rear adjustment mechanism from adjusting the headrest cover rearward;
wherein the unlocking mechanism cooperates with the locking mechanism and is configured to unlock the locking of the locking mechanism when the front-rear adjustment mechanism adjusts the headrest cover rearward, thereby enabling the front-rear adjustment mechanism to adjust the headrest cover rearward,
preferably, wherein the locking mechanism comprises a first locking member and a second locking member, wherein the first locking member is capable of engaging with the second locking member in a resettable manner; wherein when the front-rear adjustment mechanism adjusts the headrest cover forward, it is capable of driving the second locking member to move so as to disengage from the first locking member, thereby allowing the front-rear adjustment mechanism to adjust the headrest cover forward; wherein when the front-rear adjustment mechanism adjusts the headrest cover rearward, the unlocking mechanism is capable of driving the first locking member to move so as to disengage from the second locking member, thereby allowing the front-rear adjustment mechanism to adjust the headrest cover rearward.

5. The manually front-rear adjustable headrest assembly according to claim 4, **characterized in that** a first mating toothed portion is provided at one end of the first locking member, and the second locking member has a second mating toothed portion, wherein the first mating toothed portion and the second mating toothed portion are configured such that the forward adjustment movement of the front-rear adjustment mechanism is capable of driving the second locking member to move, causing the first mating toothed portion and the second mating toothed portion to automatically disengage from each other, thereby allowing the front-rear adjustment mechanism to adjust the headrest cover forward; whereas the rearward adjustment movement of the front-rear adjustment mechanism causes the first mating toothed portion and the second mating toothed portion to remain engaged, thereby restricting the front-rear adjustment mechanism from adjusting the headrest cover rearward.

6. The manually front-rear adjustable headrest assembly according to claim 5, **characterized in that** the unlocking mechanism comprises an unlocking moving member, and movement of the unlocking moving member in a first direction is capable of driving the first locking member to move, so as to disengage the first locking member from the second locking member, thereby allowing the front-rear adjustment mechanism to adjust the headrest rearward.

7. The manually front-rear adjustable headrest assembly according to claim 6, **characterized in that** the unlocking mechanism further comprises an intermediate transmission member cooperating with the first locking member, wherein movement of the unlocking moving member in the first direction is capable of driving the intermediate transmission member to move, which in turn drives the first locking member to rotate.

8. The manually front-rear adjustable headrest assembly according to claim 7, **characterized in that** movement of the unlocking moving member in the first direction is capable of driving the intermediate transmission member to rotate, thereby driving the first locking member to rotate, preferably, wherein the intermediate transmission member comprises a vertically extending rotary shaft (112) and first and second protruding portions (8021, 8022) provided on the rotary shaft for cooperation with the unlocking moving member and the first locking member, respectively, such that movement of the unlocking moving member in the first direction drives the rotary shaft to rotate via the first protruding portion, and the second protruding portion then drives the first locking member to rotate about a first rotation axis extending in the first direction, and/or
wherein movement of the unlocking moving member in the first direction is capable of driving the intermediate transmission member to translate, thereby driving the first locking member to rotate, preferably, wherein the unlocking moving member and the intermediate transmission member cooperate via a first inclined surface structure, such that movement of the unlocking moving member in the first direction is capable of driving the intermediate transmission member to translate in a second direction orthogonal to the first direction, wherein the translation of the intermediate transmission member in this second direction causes the first locking member to rotate, and/or
wherein the rotatable first locking member has a protruding hook-shaped portion serving as the first mating toothed portion, wherein the shape of this hook-shaped portion and the shape of the second mating toothed portion of the second locking member are designed such that the first mating toothed portion of the rotatable first locking member and the second mating toothed portion of the second locking member form a first ratchet structure, wherein when the front-rear adjustment mechanism adjusts the headrest cover forward, it is capable of driving the second locking member to move, causing the first locking member to rotate and its hook-shaped portion to automatically disengage from the second mating toothed portion.

9. The manually front-rear adjustable headrest assembly according to claim 6, **characterized in that** movement of the unlocking moving member in the first direction is capable of driving the first locking member to translate, preferably, wherein the unlocking moving member and the first locking member cooperate via a second inclined surface structure, such that movement of the unlocking moving member in the first direction is capable of driving the first locking member to translate along another second direction orthogonal to the first direction, preferably, wherein the first mating toothed portion of the translatable first locking member and the second mating toothed portion of the second locking member form a second ratchet structure, wherein when the front-rear adjustment mechanism adjusts the headrest cover forward, it is capable of driving the second locking member to move, causing the first locking member to translate and its first mating toothed portion to automatically disengage from the second mating toothed portion, and/or
wherein the manually front-rear adjustable headrest assembly further comprises an up-down adjustment mechanism, the up-down adjustment mechanism comprising a moving part (10b) and a fixed base (10a), wherein the fixed base is connected to the front-rear adjustment mechanism, the moving part is connected to the headrest cover, and the moving part is capable of sliding up and down relative to the fixed base, thereby realizing up-down adjustment of the headrest cover, preferably, wherein a plurality of spaced-apart locking slots are provided on the fixed base, wherein the unlocking moving member serves as an up-down adjustment unlocking member and cooperates with the locking slots, wherein when the unlocking moving member engages with the locking slots, adjustment of the headrest cover by the up-down adjustment mechanism is restricted; whereas when the unlocking moving member disengages from the locking slots, adjustment of the headrest cover by the up-down adjustment mechanism is permitted, preferably, wherein the unlocking moving member includes a protruding moving portion (10d), wherein movement of the unlocking moving member in the first direction causes the protruding moving portion to disengage from the locking slots, while simultaneously driving the first locking member to move, so as to disengage from the second locking member, thereby permitting up-down adjustment of the headrest by the up-down adjustment mechanism and rearward adjustment of the headrest by the front-rear adjustment mechanism, preferably, wherein the up-down adjustment mechanism further comprises a second motor assembly, the second motor assembly comprising a second motor (126), a second lead screw rotatably connected to the second motor, and a second nut (14) provided on the second lead screw, wherein the second motor is fixedly arranged relative to one of the fixed base and the moving part, and the second nut is operatively connected to the other of the fixed base and the moving part, wherein when the second motor drives the second nut to move along the second lead screw, the moving part moves relative to the fixed base.

10. The manually front-rear adjustable headrest assembly according to claim 5, **characterized in that** the second locking member is arranged on one of the front linkage and the rear linkage, such that the second mating toothed portion is close to any one of the multiple hinge points, wherein when the second mating toothed portion is close to an upper hinge point, the first locking member is movably arranged on the upper connecting plate; whereas when the second mating toothed portion is close to a lower hinge point, the first locking member is movably arranged on the base,
preferably, wherein the second locking member further has a linkage hinge portion for hingedly connecting the front linkage to the upper connecting plate, wherein the second locking member is arranged on a lateral region of the intermediate connecting portion of the front linkage,
preferably, wherein the second locking member has a protrusion (1072) extending laterally in its transverse direction to increase the connection area between the second locking member and the front linkage,
preferably, wherein a stopper (1034) is provided on the side of the first locking member opposite to the upper connecting plate or the base, the stopper being configured to restrict lateral movement of the first locking member to prevent tooth disengagement between the first mating toothed portion and the second mating toothed portion,
preferably, wherein when the first locking member is configured to be slidable, the first locking member is slidably arranged on the upper connecting plate or the base via a slide slot-type sliding structure.

11. The manually front-rear adjustable headrest assembly according to claim 6, **characterized in that** the unlocking moving member comprises or is configured as a push member (6), wherein pushing of push member in the first direction is capable of driving the first locking member to move.

12. An electrically front-rear adjustable headrest assembly, **characterized in that** it comprises the front-rear adjustment mechanism according to claim 1 or 2, and a first motor assembly for driving the front-rear adjustment mechanism to perform front-rear adjustment movement, the first motor assembly being connected as the front-rear adjustment drive device to the front-rear adjustment mechanism at the second connection point.

13. The electrically front-rear adjustable headrest assembly according to claim 12, **characterized in that** the first motor assembly comprises a first motor (124), a first lead screw rotatably connected to the first motor, and a first nut provided on the first lead screw, wherein the first motor is pivotally arranged on one of the base and the upper connecting plate, and the first nut (122) is pivotally connected to one of the front linkage and the rear linkage; or alternatively, the first motor is pivotally arranged on one of the front linkage and the rear linkage, and the first nut is pivotally connected to one of the base and the upper connecting plate,
preferably, wherein the first motor is pivotally arranged on the base, and the first nut is directly or indirectly-via an intermediate connecting plate-pivotally connected to the front linkage,
preferably, wherein the first nut is pivotally connected to the intermediate connecting portion of the front linkage.

14. The electrically front-rear adjustable headrest assembly according to claim 12, **characterized in that** the electrically front-rear adjustable headrest assembly further comprises an up-down adjustment mechanism, the up-down adjustment mechanism comprising a moving part and a fixed base, wherein the fixed base is connected to the front-rear adjustment mechanism, the moving part is connected to the headrest cover, and the moving part is capable of sliding up and down relative to the fixed base, thereby realizing up-down adjustment of the headrest cover,
preferably, wherein a plurality of spaced-apart locking slots are provided on the fixed base, and the up-down adjustment mechanism comprises an up-down adjustment unlocking member cooperating with the locking slots, wherein when the up-down adjustment unlocking member engages with the locking slots, adjustment of the headrest cover by the up-down adjustment mechanism is restricted; whereas when the up-down adjustment unlocking member disengages from the locking slots, adjustment of the headrest cover by the up-down adjustment mechanism is permitted,
preferably, wherein the up-down adjustment mechanism further comprises a second motor assembly, the second motor assembly comprising a second motor, a second lead screw rotatably connected to the second motor, and a second nut provided on the second lead screw, wherein the second motor is fixedly arranged relative to one of the fixed base and the moving part, and the second nut is operatively connected to the other of the fixed base and the moving part, such that when the second motor drives the second nut to move along the second lead screw, the moving part moves relative to the fixed base.

15. A vehicle seat, **characterized in that** the vehicle seat comprises either the manually front-rear adjustable headrest assembly according to any one of claims 3 to 11, or the electrically front-rear adjustable headrest assembly according to any one of claims 12 to 14.
